# EUROPEAN PATENT APPLICATION

(11) **EP 3 735 095 A1**
(43) Date of publication of application: **04.11.2020**
(21) Application number: 18896712.9
(22) Date of filing: 28.12.2018
(51) Int. Cl.: H04W 76/19, H04W 16/32, H04W 24/04, H04W 72/04

(54) **COMMUNICATION SYSTEM AND BASE STATION**

(30) Priority: 28.12.2017 JP 2017253649
(71) Applicant: Mitsubishi Electric Corporation, Tokyo 100-8310 (JP)
(72) Inventor: SHIMODA, Tadahiro, Tokyo 100-8310 (JP); MOCHIZUKI, Mitsuru, Tokyo 100-8310 (JP)
(74) Representative: Sajda, Wolf E.
(86) International application number: PCT/JP2018/048400
(87) International publication number: WO 2019/131985

(57) **Abstract**

A highly reliable communication system is provided, for example. A communication system includes a communication terminal device, and a plurality of base stations configured to perform radio communication with the communication terminal device. The plurality of base stations include a master base station and a secondary base station configuring dual connectivity with respect to the communication terminal device. When failure occurs in a secondary cell group (SCG) used for communication between the communication terminal device and the secondary base station (ST801), the master base station acquires latest SCG configuration (ST802).

## Description

### Technical Field

The present invention relates to, for example, a communication system in which radio communication is performed between a communication terminal device such as a user equipment device and a base station device.

### Background Art

The 3rd generation partnership project (3GPP), the standard organization regarding the mobile communication system, is studying communication systems referred to as long term evolution (LTE) regarding radio sections and system architecture evolution (SAE) regarding the overall system configuration including a core network and a radio access network which is hereinafter collectively referred to as a network as well (for example, see Non-Patent Documents 1 to 5). This communication system is also referred to as 3.9 generation (3.9 G) system.

As the access scheme of the LTE, orthogonal frequency division multiplexing (OFDM) is used in a downlink direction and single carrier frequency division multiple access (SC-FDMA) is used in an uplink direction. Further, differently from the wideband code division multiple access (W-CDMA), circuit switching is not provided but a packet communication system is only provided in the LTE.

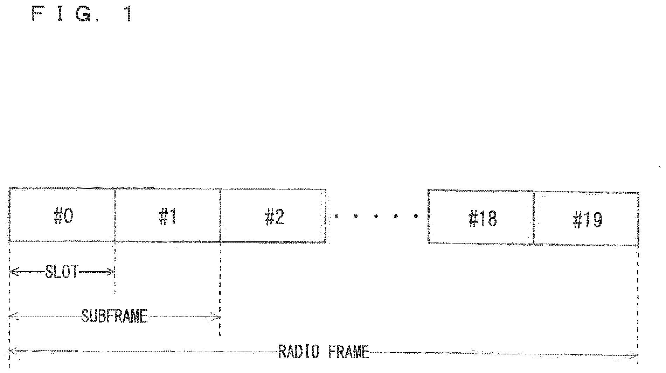

The decisions taken in 3GPP regarding the frame configuration in the LTE system described in Non-Patent Document 1 (Chapter 5) are described with reference to FIG. 1. FIG. 1 is a diagram illustrating the configuration of a radio frame used in the LTE communication system. With reference to FIG. 1, one radio frame is 10 ms. The radio frame is divided into ten equally sized subframes. The subframe is divided into two equally sized slots. The first and sixth subframes contain a downlink synchronization signal per radio frame. The synchronization signals are classified into a primary synchronization signal (P-SS) and a secondary synchronization signal (S-SS).

Non-Patent Document 1 (Chapter 5) describes the decisions by 3GPP regarding the channel configuration in the LTE system. It is assumed that the same channel configuration is used in a closed subscriber group (CSG) cell as that of a non-CSG cell.

A physical broadcast channel (PBCH) is a channel for downlink transmission from a base station device (hereinafter may be simply referred to as a "base station") to a communication terminal device (hereinafter may be simply referred to as a "communication terminal") such as a user equipment device (hereinafter may be simply referred to as a "user equipment"). A BCH transport block is mapped to four subframes within a 40 ms interval. There is no explicit signaling indicating 40 ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted per subframe.

A physical downlink control channel (PDCCH) is a channel for downlink transmission from a base station to a communication terminal. The PDCCH notifies of the resource allocation information for downlink shared channel (DL-SCH) being one of the transport channels described below, resource allocation information for a paging channel (PCH) being one of the transport channels described below, and hybrid automatic repeat request (HARQ) information related to DL-SCH. The PDCCH carries an uplink scheduling grant. The PDCCH carries acknowledgement (Ack) / negative acknowledgement (Nack) that is a response signal to uplink transmission. The PDCCH is referred to as an L1/L2 control signal as well.

A physical downlink shared channel (PDSCH) is a channel for downlink transmission from a base station to a communication terminal. A downlink shared channel (DL-SCH) that is a transport channel and a PCH that is a transport channel are mapped to the PDSCH.

A physical multicast channel (PMCH) is a channel for downlink transmission from a base station to a communication terminal. A multicast channel (MCH) that is a transport channel is mapped to the PMCH.

A physical uplink control channel (PUCCH) is a channel for uplink transmission from a communication terminal to a base station. The PUCCH carries Ack/Nack that is a response signal to downlink transmission. The PUCCH carries a channel quality indicator (CQI) report. The CQI is quality information indicating the quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) that is one of the transport channels is mapped to the PUSCH.

A physical hybrid ARQ indicator channel (PHICH) is a channel for downlink transmission from a base station to a communication terminal. The PHICH carries Ack/Nack that is a response signal to uplink transmission. A physical random access channel (PRACH) is a channel for uplink transmission from the communication terminal to the base station. The PRACH carries a random access preamble.

A downlink reference signal (RS) is a known symbol in the LTE communication system. The following five types of downlink reference signals are defined as: a cell-specific reference signal (CRS), an MBSFN reference signal, a data demodulation reference signal (DM-RS) being a UE-specific reference signal, a positioning reference signal (PRS), and a channel state information reference signal (CSI-RS). The physical layer measurement objects of a communication terminal include reference signal received powers (RSRPs).

The transport channels described in Non-Patent Document 1 (Chapter 5) are described. A broadcast channel (BCH) among the downlink transport channels is broadcast to the entire coverage of a base station (cell). The BCH is mapped to the physical broadcast channel (PBCH).

Retransmission control according to a hybrid ARQ (HARQ) is applied to a downlink shared channel (DL-SCH). The DL-SCH can be broadcast to the entire coverage of the base station (cell). The DL-SCH supports dynamic or semi-static resource allocation. The semi-static resource allocation is also referred to as persistent scheduling. The DL-SCH supports discontinuous reception (DRX) of a communication terminal for enabling the communication terminal to save power. The DL-SCH is mapped to the physical downlink shared channel (PDSCH).

The paging channel (PCH) supports DRX of the communication terminal for enabling the communication terminal to save power. The PCH is required to be broadcast to the entire coverage of the base station (cell). The PCH is mapped to physical resources such as the physical downlink shared channel (PDSCH) that can be used dynamically for traffic.

The multicast channel (MCH) is used for broadcasting the entire coverage of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control according to a hybrid ARQ (HARQ) is applied to an uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH involves a collision risk. The RACH is mapped to the physical random access channel (PRACH).

The HARQ is described. The HARQ is the technique for improving the communication quality of a channel by combination of automatic repeat request (ARQ) and error correction (forward error correction). The HARQ is advantageous in that error correction functions effectively by retransmission even for a channel whose communication quality changes. In particular, it is also possible to achieve further quality improvement in retransmission through combination of the reception results of the first transmission and the reception results of the retransmission.

An example of the retransmission method is described. If the receiver fails to successfully decode the received data, in other words, if a cyclic redundancy check (CRC) error occurs (CRC = NG), the receiver transmits "Nack" to the transmitter. The transmitter that has received "Nack" retransmits the data. If the receiver successfully decodes the received data, in other words, if a CRC error does not occur (CRC = OK), the receiver transmits "AcK" to the transmitter. The transmitter that has received "Ack" transmits the next data.

The logical channels described in Non-Patent Document 1 (Chapter 6) are described. A broadcast control channel (BCCH) is a downlink channel for broadcast system control information. The BCCH that is a logical channel is mapped to the broadcast channel (BCH) or downlink shared channel (DL-SCH) that is a transport channel.

A paging control channel (PCCH) is a downlink channel for transmitting paging information and system information change notifications. The PCCH is used when the network does not know the cell location of a communication terminal. The PCCH that is a logical channel is mapped to the paging channel (PCH) that is a transport channel.

A common control channel (CCCH) is a channel for transmission control information between communication terminals and a base station. The CCCH is used in a case where the communication terminals have no RRC connection with the network. In the downlink direction, the CCCH is mapped to the downlink shared channel (DL-SCH) that is a transport channel. In the uplink direction, the CCCH is mapped to the uplink shared channel (UL-SCH) that is a transport channel.

A multicast control channel (MCCH) is a downlink channel for point-to-multipoint transmission. The MCCH is used for transmission of MBMS control information for one or several MTCHs from a network to a communication terminal. The MCCH is used only by a communication terminal during reception of the MBMS. The MCCH is mapped to the multicast channel (MCH) that is a transport channel.

A dedicated control channel (DCCH) is a channel that transmits dedicated control information between a communication terminal and a network on a point-to-point basis. The DCCH is used when the communication terminal has an RRC connection. The DCCH is mapped to the uplink shared channel (UL-SCH) in uplink and mapped to the downlink shared channel (DL-SCH) in downlink.

A dedicated traffic channel (DTCH) is a point-to-point communication channel for transmission of user information to a dedicated communication terminal. The DTCH exists in uplink as well as downlink. The DTCH is mapped to the uplink shared channel (UL-SCH) in uplink and mapped to the downlink shared channel (DL-SCH) in downlink.

A multicast traffic channel (MTCH) is a downlink channel for traffic data transmission from a network to a communication terminal. The MTCH is a channel used only by a communication terminal during reception of the MBMS. The MTCH is mapped to the multicast channel (MCH).

CGI represents a cell global identifier. ECGI represents an E-UTRAN cell global identifier. A closed subscriber group (CSG) cell is introduced into the LTE, and the long term evolution advanced (LTE-A) and universal mobile telecommunication system (UMTS) described below.

The closed subscriber group (CSG) cell is a cell in which subscribers who are allowed to use are specified by an operator (hereinafter, also referred to as a "cell for specific subscribers"). The specified subscribers are allowed to access one or more cells of a public land mobile network (PLMN). One or more cells to which the specified subscribers are allowed access are referred to as "CSG cell(s)". Note that access is limited in the PLMN

The CSG cell is part of the PLMN that broadcasts a specific CSG identity (CSG ID) and broadcasts "TRUE" in a CSG indication. The authorized members of the subscriber group who have registered in advance access the CSG cells using the CSG ID that is the access permission information.

The CSG ID is broadcast by the CSG cell or cells. A plurality of CSG IDs exist in the LTE communication system. The CSG IDs are used by communication terminals (UEs) for making access from CSG-related members easier.

The locations of communication terminals are tracked based on an area composed of one or more cells. The locations are tracked for enabling tracking the locations of communication terminals and calling communication terminals, in other words, incoming calling to communication terminals even in an idle state. An area for tracking locations of communication terminals is referred to as a tracking area.

In 3GPP, base stations referred to as Home-NodeB (Home-NB; HNB) and Home-eNodeB (Home-eNB; HeNB) are studied. HNB/HeNB is a base station for, for example, household, corporation, or commercial access service in UTRAN/E-UTRAN. Non-Patent Document 2 discloses three different modes of the access to the HeNB and HNB. Specifically, an open access mode, a closed access mode, and a hybrid access mode are disclosed.

Further, specifications of long term evolution advanced (LTE-A) are pursed as Release 10 in 3GPP (see Non-Patent Documents 3 and 4). The LTE-A is based on the LTE radio communication system and is configured by adding several new techniques to the system.

Carrier aggregation (CA) is studied for the LTE-A system in which two or more component carriers (CCs) are aggregated to support wider transmission bandwidths up to 100 MHz. Non-Patent Document 1 describes the CA.

In a case where CA is configured, a UE has a single RRC connection with a network (NW). In RRC connection, one serving cell provides NAS mobility information and security input. This cell is referred to as a primary cell (PCell). In downlink, a carrier corresponding to PCell is a downlink primary component carrier (DL PCC). In uplink, a carrier corresponding to PCell is an uplink primary component carrier (UL PCC).

A secondary cell (SCell) is configured to form a serving cell group with a PCell, in accordance with the UE capability. In downlink, a carrier corresponding to SCell is a downlink secondary component carrier (DL SCC). In uplink, a carrier corresponding to SCell is an uplink secondary component carrier (UL SCC).

A serving cell group of one PCell and one or more SCells is configured for one UE.

The new techniques in the LTE-A include the technique of supporting wider bands (wider bandwidth extension) and the coordinated multiple point transmission and reception (CoMP) technique. The CoMP studied for LTE-A in 3GPP is described in Non-Patent Document 1.

Furthermore, the use of small eNBs (hereinafter also referred to as "small-scale base station devices") configuring small cells is studied in 3GPP to satisfy tremendous traffic in the future. In an example technique under study, a large number of small eNBs is installed to configure a large number of small cells, which increases spectral efficiency and communication capacity. The specific techniques include dual connectivity (abbreviated as DC) with which a UE communicates with two eNBs through connection thereto. Non-Patent Document 1 describes the DC.

For eNBs that perform dual connectivity (DC), one may be referred to as a master eNB (abbreviated as MeNB), and the other may be referred to as a secondary eNB (abbreviated as SeNB).

The traffic flow of a mobile network is on the rise, and the communication rate is also increasing. It is expected that the communication rate is further increased when the operations of the LTE and the LTE-A are fully initiated.

For increasingly enhanced mobile communications, the fifth generation (hereinafter also referred to as "5G") radio access system is studied whose service is aimed to be launched in 2020 and afterward. For example, in the Europe, an organization named METIS summarizes the requirements for 5G (see Non-Patent Document 5).

The requirements in the 5G radio access system show that a system capacity shall be 1000 times as high as, a data transmission rate shall be 100 times as high as, a data latency shall be one tenth (1/10) as low as, and simultaneously connected communication terminals 100 times as many as those of the LTE system, to further reduce the power consumption and device cost.

To satisfy such requirements, the study of 5G standards is pursued as Release 15 in 3GPP (see Non-Patent Documents 6 to 16). The techniques on 5G radio sections are referred to as "New Radio Access Technology" ("New Radio" is abbreviated as NR), and the several new techniques are being studied (see Non-Patent Documents 11 to 16). For example, a direct SCG configuration notification from a secondary base station to a UE, a beam failure recovery request using the PUCCH, etc. are under study (see Non-Patent Documents 17 and 18).

### Prior Art Documents

### Non-Patent Documents

Non-Patent Document 1: 3GPP TS 36.300 V14.3.0
Non-Patent Document 2: 3GPP S1-083461
Non-Patent Document 3: 3GPP TR 36.814 V9.2.0
Non-Patent Document 4: 3GPP TR 36.912 V14.0.0
Non-Patent Document 5: "Scenarios, requirements and KPIs for 5G mobile and wireless system", ICT-317669-METIS/D1.1
Non-Patent Document 6: 3GPP TR 23.799 V14.0.0
Non-Patent Document 7: 3GPP TR 38.801 V14.0.0
Non-Patent Document 8: 3GPP TR 38.802 V14.1.0
Non-Patent Document 9: 3GPP TR 38.804 V14.0.0
Non-Patent Document 10: 3GPP TR 38.912 V14.0.0
Non-Patent Document 11: 3GPP RP-172115
Non-Patent Document 12: 3GPP TS 37.340 V1.2.1
Non-Patent Document 13: 3GPP TS 38.211 V1.2.0
Non-Patent Document 14: 3GPP TS 38.213 V1.2.0
Non-Patent Document 15: 3GPP TS 38.300 V1.2.1
Non-Patent Document 16: 3GPP TS 38.323 VI.0.1
Non-Patent Document 17: 3GPP R2-1707384
Non-Patent Document 18: 3GPP R1-1718483

### Summary

### Problem to be Solved by the Invention

In NR, DC using an eNB and a gNB is under discussion. Further, in NR, low-latency and high-reliability communication is required. NR enables direct SCG configuration notification from a secondary gNB (hereinafter also referred to as an SgNB in some cases) to the UE. However, inconsistency concerning SCG configuration may occur among the UE, the MeNB, and the SgNB, due to occurrence of SCG failure in DC and signaling between the base station and the UE in various procedures of DC. Therefore, malfunction occurs in the communication system using NR, and reliability in communicate cannot be secured.

NR also enables the UE to transmit beam failure recovery request signaling to the base station by using the PUCCH in occurrence of beam failure (Beam failure) between the base station and the UE. However, the details of the beam failure recovery request signaling are not disclosed, and thus the signaling using the PUCCH cannot be notified in the communication system. Therefore, there is a problem that prompt recovery from beam failure cannot be performed between the UE and the base station.

Although the above describes problems involving the use of NR, similar problems occur also not involving the use of NR

The present invention has one object to provide a highly reliable communication system, for example.

### Means to Solve the Problem

According to the present invention, provided is, for example, a communication system including: a communication terminal device; and a plurality of base stations configured to perform radio communication with the communication terminal device, wherein the plurality of base stations include a master base station and a secondary base station configuring dual connectivity with respect to the communication terminal device, and when failure occurs in a secondary cell group (SCG) used for communication between the communication terminal device and the secondary base station, the master base station acquires latest SCG configuration.

According to the present invention, provided is, for example, a base station configured to perform radio communication with a communication terminal device, wherein the base station operates as a master base station of dual connectivity with respect to the communication terminal device, and when failure occurs in a secondary cell group (SCG) used for communication between the communication terminal device and a secondary base station of the dual connectivity, the base station acquires latest SCG configuration.

### Effects of the Invention

According to the present invention, a highly reliable communication system can be provided, for example.

These objects, features, aspects and advantages of the present invention become more apparent from the following detailed description of the present invention when taken in conjunction with the accompanying drawings.

### Brief Description of Drawings

- FIG. 1: is a diagram illustrating the configuration of a radio frame for use in an LTE communication system.
- FIG. 2: is a block diagram showing the overall configuration of an LTE communication system 200 under discussion of 3GPP.
- FIG. 3: is a block diagram showing the configuration of a user equipment 202 shown in FIG. 2.
- FIG. 4: is a block diagram showing the configuration of a base station 203 shown in FIG. 2.
- FIG. 5: is a block diagram showing the configuration of an MME
- FIG. 6: is a flowchart showing an outline from a cell search to an idle state operation performed by a communication terminal (UE) in the LTE communication system.
- FIG. 7: shows the concept of a cell configuration when macro eNBs and small eNBs coexist.
- FIG. 8: is a diagram illustrating an example of a sequence in which an MN acquires the latest SCG configuration in SCG failure according to the first embodiment.
- FIG. 9: is a diagram illustrating an example of a sequence in which the MN acquires the latest SCG configuration in SN initiated SN release according to the first embodiment.
- FIG. 10: is a diagram illustrating an example of a sequence in which the MN acquires the latest SCG configuration in MN initiated SN release according to the first embodiment.
- FIG. 11: is a diagram illustrating an example of a sequence in which the MN acquires the latest SCG configuration in MN initiated SN modification according to the first embodiment.
- FIG. 12: is a diagram illustrating an example of a sequence in which the MN acquires the latest SCG configuration in SN initiated SN modification according to the first embodiment.
- FIG. 13: is a diagram illustrating an example of a sequence in which a target MN acquires the latest SCG configuration in inter-MN handover without SN change according to the first embodiment.
- FIG. 14: is the diagram illustrating the example of the sequence in which the target MN acquires the latest SCG configuration in inter-MN handover without SN change according to the first embodiment.
- FIG. 15: is a diagram illustrating an example of a sequence in which a source MN acquires the latest SCG configuration in MN-to-eNB change according to the first embodiment.
- FIG. 16: is the diagram illustrating the example of the sequence in which the source MN acquires the latest SCG configuration in MN-to-eNB change according to the first embodiment.
- FIG. 17: is a sequence diagram illustrating an example of operation of autonomously changing a notification target base station of SCG failure information in occurrence of SCG failure according to a second embodiment.
- FIG. 18: is a diagram illustrating an example of a BFRQ PUCCH format according to a third embodiment.

### Description of Embodiments

### First Embodiment

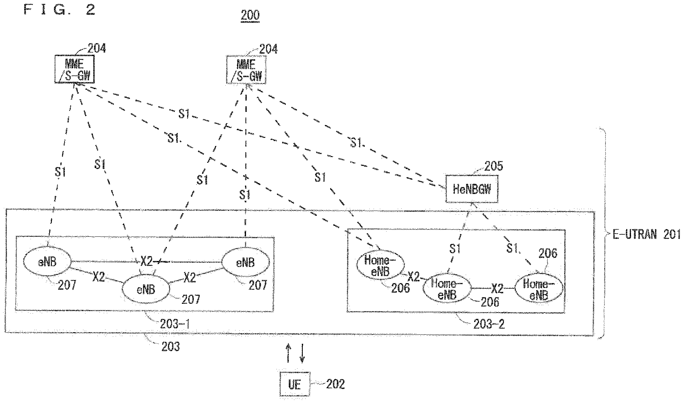

FIG. 2 is a block diagram showing an overall configuration of an LTE communication system 200 which is under discussion of 3GPP. FIG. 2 is described here. A radio access network is referred to as an evolved universal terrestrial radio access network (E-UTRAN) 201. A user equipment device (hereinafter, referred to as a "user equipment (UE)") 202 that is a communication terminal device is capable of radio communication with a base station device (hereinafter, referred to as a "base station (E-UTRAN Node B: eNB)") 203 and transmits and receives signals through radio communication.

Here, the "communication terminal device" covers not only a user equipment device such as a mobile phone terminal device, but also an unmovable device such as a sensor. In the following description, the "communication terminal device" may be simply referred to as a "communication terminal".

The E-UTRAN is composed of one or a plurality of base stations 203, provided that a control protocol for the user equipment 202 such as a radio resource control (RRC), and user planes (hereinafter also referred to as "U-planes") such as a packet data convergence protocol (PDCP), radio link control (RLC), medium access control (MAC), or physical layer (PHY) are terminated in the base station 203.

The control protocol radio resource control (RRC) between the user equipment 202 and the base station 203 performs, for example, broadcast, paging, RRC connection management. The states of the base station 203 and the user equipment 202 in RRC are classified into RRC_IDLE and RRC_CONNECTED.

In RRC IDLE, public land mobile network (PLMN) selection, system information (SI) broadcast, paging, cell re-selection, mobility and others are performed. In RRC_CONNECTED, the user equipment has RRC connection and is capable of transmitting and receiving data to and from a network. In RRC_CONNECTED, for example, handover (HO) and measurement of a neighbor cell are performed.

The base stations 203 are classified into eNBs 207 and Home-eNBs 206. The communication system 200 is equipped with an eNB group 203-1 including a plurality of eNBs 207 and a Home-eNB group 203-2 including a plurality of Home-eNBs 206. A system, composed of an evolved packet core (EPC) being a core network and an E-UTRAN 201 being a radio access network, is referred to as an evolved packet system (EPS). The EPC being a core network and the E-UTRAN 201 being a radio access network may be collectively referred to as a "network".

The eNB 207 is connected to an MME/S-GW unit (hereinafter, also referred to as an "MME unit") 204 including a mobility management entity (MME), a serving gateway (S-GW), or an MME and an S-GW by means of an S1 interface, and control information is communicated between the eNB 207 and the MME unit 204. A plurality of MME units 204 may be connected to one eNB 207. The eNBs 207 are connected to each other by means of an X2 interface, and control information is communicated between the eNBs 207.

The Home-eNB 206 is connected to the MME unit 204 by means of an S1 interface, and control information is communicated between the Home-eNB 206 and the MME unit 204. A plurality of Home-eNBs 206 are connected to one MME unit 204. Alternatively, the Home-eNBs 206 are connected to the MME units 204 through a Home-eNB gateway (HeNBGW) 205. The Home-eNB 206 is connected to the HeNBGW 205 by means of an S1 interface, and the HeNBGW 205 is connected to the MME unit 204 by means of an S1 interface.

One or a plurality of Home-eNBs 206 are connected to one HeNBGW 205, and information is communicated therebetween through an S1 interface. The HeNBGW 205 is connected to one or a plurality of MME units 204, and information is communicated therebetween through an S1 interface.

The MME units 204 and HeNBGW 205 are entities of higher layer, specifically, higher nodes, and control the connections between the user equipment (UE) 202 and the eNB 207 and the Home-eNB 206 being base stations. The MME units 204 configure an EPC being a core network. The base station 203 and the HeNBGW 205 configure the E-UTRAN 201.

Further, the configuration below is studied in 3GPP. The X2 interface between the Home-eNBs 206 is supported. In other words, the Home-eNBs 206 are connected to each other by means of an X2 interface, and control information is communicated between the Home-eNBs 206. The HeNBGW 205 appears to the MME unit 204 as the Home-eNB 206. The HeNBGW 205 appears to the Home-eNB 206 as the MME unit 204.

The interfaces between the Home-eNBs 206 and the MME units 204 are the same, which are the S1 interfaces, in both cases where the Home-eNB 206 is connected to the MME unit 204 through the HeNBGW 205 and it is directly connected to the MME unit 204.

The base station device 203 may configure a single cell or a plurality of cells. Each cell has a range predetermined as a coverage in which the cell can communicate with the user equipment 202 and performs radio communication with the user equipment 202 within the coverage. In a case where one base station device 203 configures a plurality of cells, every cell is configured so as to communicate with the user equipment 202.

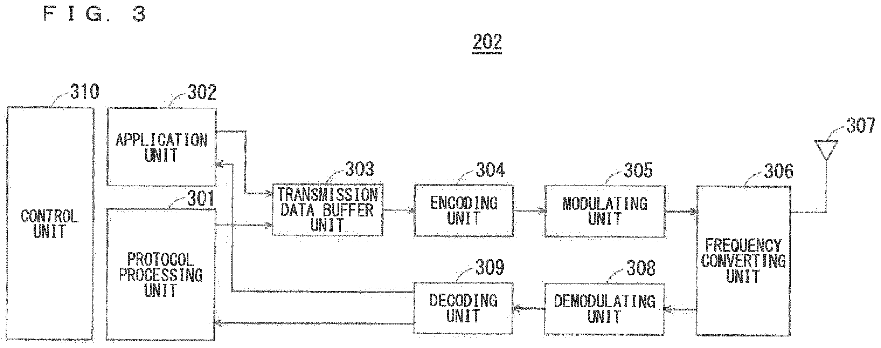

FIG. 3 is a block diagram showing the configuration of the user equipment 202 of FIG. 2. The transmission process of the user equipment 202 shown in FIG. 3 is described. First, a transmission data buffer unit 303 stores the control data from a protocol processing unit 301 and the user data from an application unit 302. The data stored in the transmission data buffer unit 303 is passed to an encoding unit 304, and is subjected to an encoding process such as error correction. There may exist the data output from the transmission data buffer unit 303 directly to a modulating unit 305 without the encoding process.

The data encoded by the encoding unit 304 is modulated by the modulating unit 305. The modulated data is converted into a baseband signal, and the baseband signal is output to a frequency converting unit 306 and is then converted into a radio transmission frequency. After that, a transmission signal is transmitted from an antenna 307 to the base station 203.

The user equipment 202 executes the reception process as follows. The radio signal from the base station 203 is received through the antenna 307. The received signal is converted from a radio reception frequency into a baseband signal by the frequency converting unit 306 and is then demodulated by a demodulating unit 308. The demodulated data is passed to a decoding unit 309, and is subjected to a decoding process such as error correction. Among the pieces of decoded data, the control data is passed to the protocol processing unit 301, and the user data is passed to the application unit 302. A series of processes by the user equipment 202 is controlled by a control unit 310. This means that, though not shown in FIG. 3, the control unit 310 is connected to the individual units 301 to 309.

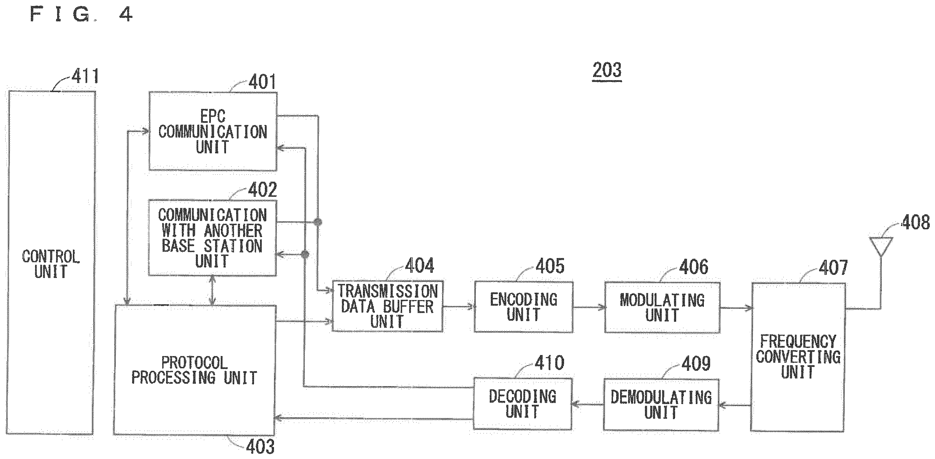

FIG. 4 is a block diagram showing the configuration of the base station 203 of FIG. 2. The transmission process of the base station 203 shown in FIG. 4 is described. An EPC communication unit 401 performs data transmission and reception between the base station 203 and the EPC (such as the MME unit 204), HeNBGW 205 and others. A communication with another base station unit 402 performs data transmission and reception to and from another base station.

The EPC communication unit 401 and the communication with another base station unit 402 each transmit and receive information to and from a protocol processing unit 403. The control data from the protocol processing unit 403, and the user data and the control data from the EPC communication unit 401 and the communication with another base station unit 402 are stored in a transmission data buffer unit 404.

The data stored in the transmission data buffer unit 404 is passed to an encoding unit 405, and then an encoding process such as error correction is performed for the data. There may exist the data output from the transmission data buffer unit 404 directly to a modulating unit 406 without the encoding process. The encoded data is modulated by the modulating unit 406. The modulated data is converted into a baseband signal, and the baseband signal is output to a frequency converting unit 407 and is then converted into a radio transmission frequency. After that, a transmission signal is transmitted from an antenna 408 to one or a plurality of user equipments 202.

The reception process of the base station 203 is executed as follows. A radio signal from one or a plurality of user equipments 202 is received through the antenna 408. The received signal is converted from a radio reception frequency into a baseband signal by the frequency converting unit 407, and is then demodulated by a demodulating unit 409. The demodulated data is passed to a decoding unit 410 and then subjected to a decoding process such as error correction. Among the pieces of decoded data, the control data is passed to the protocol processing unit 403, the EPC communication unit 401, or the communication with another base station unit 402, and the user data is passed to the EPC communication unit 401 and the communication with another base station unit 402. A series of processes by the base station 203 is controlled by a control unit 411. This means that, though not shown in FIG. 4, the control unit 411 is connected to the individual units 401 to 410.

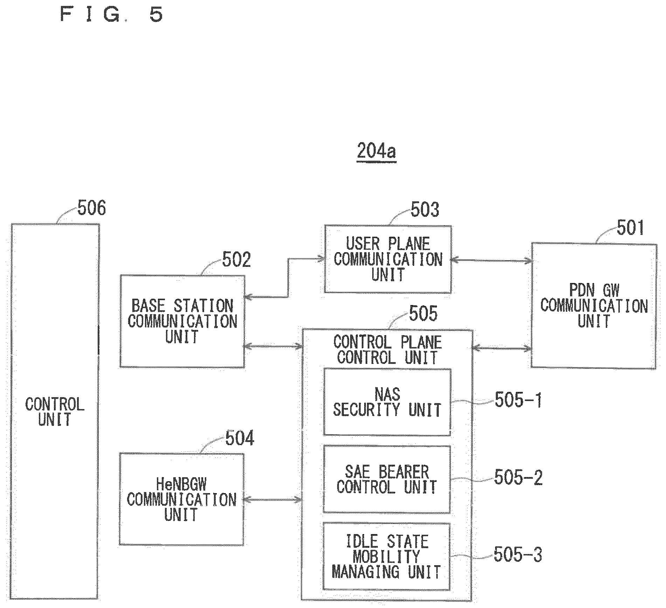

FIG. 5 is a block diagram showing the configuration of the MME. FIG. 5 shows the configuration of an MME 204a included in the MME unit 204 shown in FIG. 2 described above. A PDN GW communication unit 501 performs data transmission and reception between the MME 204a and the PDN GW. A base station communication unit 502 performs data transmission and reception between the MME 204a and the base station 203 by means of the S1 interface. In a case where the data received from the PDN GW is user data, the user data is passed from the PDN GW communication unit 501 to the base station communication unit 502 via a user plane communication unit 503 and is then transmitted to one or a plurality of base stations 203. In a case where the data received from the base station 203 is user data, the user data is passed from the base station communication unit 502 to the PDN GW communication unit 501 via the user plane communication unit 503 and is then transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

A HeNBGW communication unit 504 is provided in a case where the HeNBGW 205 is provided, which performs data transmission and reception between the MME 204a and the HeNBGW 205 by means of the interface (IF) according to an information type. The control data received from the HeNBGW communication unit 504 is passed from the HeNBGW communication unit 504 to the control plane control unit 505. The processing results of the control plane control unit 505 are transmitted to the PDN GW via the PDN GW communication unit 501. The processing results of the control plane control unit 505 are transmitted to one or a plurality of base stations 203 by means of the S1 interface via the base station communication unit 502, and are transmitted to one or a plurality of HeNBGWs 205 via the HeNBGW communication unit 504.

The control plane control unit 505 includes a NAS security unit 505-1, an SAE bearer control unit 505-2, and an idle state mobility managing unit 505-3, and performs an overall process for the control plane (hereinafter also referred to as a "C-plane"). The NAS security unit 505-1 provides, for example, security of a non-access stratum (NAS) message. The SAE bearer control unit 505-2 manages, for example, a system architecture evolution (SAE) bearer.

The idle state mobility managing unit 505-3 performs, for example, mobility management of an idle state (LTE-IDLE state which is merely referred to as idle as well), generation and control of a paging signal in the idle state, addition, deletion, update, and search of a tracking area of one or a plurality of user equipments 202 being served thereby, and tracking area list management.

The MME 204a distributes a paging signal to one or a plurality of base stations 203. In addition, the MME 204a performs mobility control of an idle state. When the user equipment is in the idle state and an active state, the MME 204a manages a list of tracking areas. The MME 204a begins a paging protocol by transmitting a paging message to the cell belonging to a tracking area in which the UE is registered. The idle state mobility managing unit 505-3 may manage the CSG of the Home-eNBs 206 to be connected to the MME 204a, CSG IDs, and a whitelist.

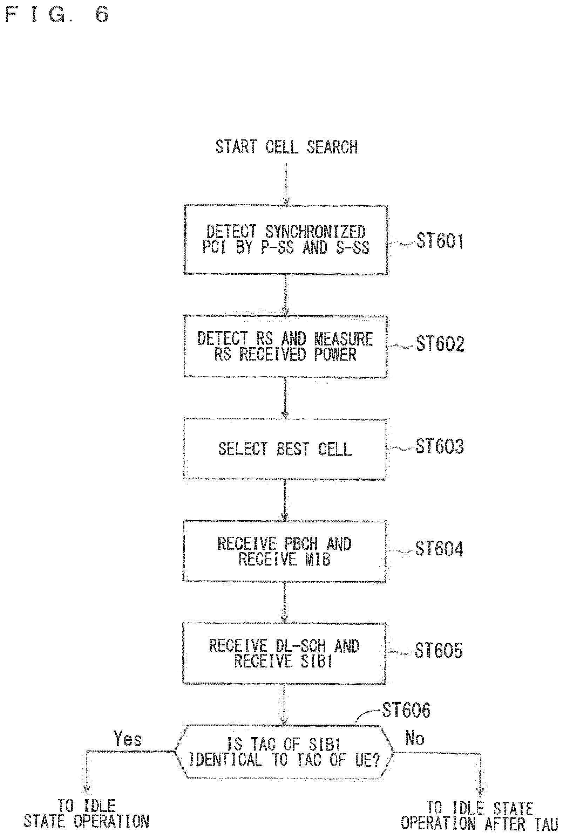

An example of a cell search method in a mobile communication system is described next. FIG. 6 is a flowchart showing an outline from a cell search to an idle state operation performed by a communication terminal (UE) in the LTE communication system. When starting a cell search, in Step ST601, the communication terminal synchronizes slot timing and frame timing by a primary synchronization signal (P-SS) and a secondary synchronization signal (S-SS) transmitted from a neighbor base station.

The P-SS and S-SS are collectively referred to as a synchronization signal (SS). Synchronization codes, which correspond one-to-one to PCIs assigned per cell, are assigned to the synchronization signals (SSs). The number of PCIs is currently studied in 504 ways. The 504 ways of PCIs are used for synchronization, and the PCIs of the synchronized cells are detected (specified).

In Step ST602, next, the user equipment detects a cell-specific reference signal (CRS) being a reference signal (RS) transmitted from the base station per cell and measures the reference signal received power (RSRP). The codes corresponding one-to-one to the PCIs are used for the reference signal RS. Separation from another cell is enabled by correlation using the code. The code for RS of the cell is calculated from the PCI specified in Step ST601, so that the RS can be detected and the RS received power can be measured.

In Step ST603, next, the user equipment selects the cell having the best RS received quality, for example, the cell having the highest RS received power, that is, the best cell, from one or more cells that have been detected up to Step ST602.

In Step ST604, next, the user equipment receives the PBCH of the best cell and obtains the BCCH that is the broadcast information. A master information block (MIB) containing the cell configuration information is mapped to the BCCH over the PBCH. Accordingly, the MIB is obtained by obtaining the BCCH through reception of the PBCH. Examples of the MIB information include the downlink (DL) system bandwidth (also referred to as a transmission bandwidth configuration (dl-bandwidth)), the number of transmission antennas, and a system frame number (SFN).

In Step ST605, next, the user equipment receives the DL-SCH of the cell based on the cell configuration information of the MIB, to thereby obtain a system information block (SIB) 1 of the broadcast information BCCH. The SIB1 contains the information about the access to the cell, information about cell selection, and scheduling information on another SIB (SIBk; k is an integer equal to or greater than two). In addition, the SIB 1 contains a tracking area code (TAC).

In Step ST606, next, the communication terminal compares the TAC of the SIB 1 received in Step ST605 with the TAC portion of a tracking area identity (TAI) in the tracking area list that has already been possessed by the communication terminal. The tracking area list is also referred to as a TAI list. TAI is the identification information for identifying tracking areas and is composed of a mobile country code (MCC), a mobile network code (MNC), and a tracking area code (TAC). MCC is a country code. MNC is a network code. TAC is the code number of a tracking area.

If the result of the comparison of Step ST606 shows that the TAC received in Step ST605 is identical to the TAC included in the tracking area list, the user equipment enters an idle state operation in the cell. If the comparison shows that the TAC received in Step ST605 is not included in the tracking area list, the communication terminal requires a core network (EPC) including, for example, MME to change a tracking area through the cell for performing tracking area update (TAU).

The device configuring a core network (hereinafter, also referred to as a "core-network-side device") updates the tracking area list based on an identification number (such as UE-ID) of a communication terminal transmitted from the communication terminal together with a TAU request signal. The core-network-side device transmits the updated tracking area list to the communication terminal. The communication terminal rewrites (updates) the TAC list of the communication terminal based on the received tracking area list. After that, the communication terminal enters the idle state operation in the cell.

Widespread use of smartphones and tablet terminal devices explosively increases traffic in cellular radio communications, causing a fear of insufficient radio resources all over the world. To increase spectral efficiency, thus, it is studied to downsize cells for further spatial separation.

In the conventional configuration of cells, the cell configured by an eNB has a relatively-wide-range coverage. Conventionally, cells are configured such that relatively -wide-range coverages of a plurality of cells configured by a plurality of macro eNBs cover a certain area.

When cells are downsized, the cell configured by an eNB has a narrow-range coverage compared with the coverage of a cell configured by a conventional eNB. Thus, in order to cover a certain area as in the conventional case, a larger number of downsized eNBs than the conventional eNBs are required.

In the description below, a "macro cell" refers to a cell having a relatively wide coverage, such as a cell configured by a conventional eNB, and a "macro eNB" refers to an eNB configuring a macro cell. A "small cell" refers to a cell having a relatively narrow coverage, such as a downsized cell, and a "small eNB" refers to an eNB configuring a small cell.

The macro eNB may be, for example, a "wide area base station" described in Non-Patent Document 7.

The small eNB may be, for example, a low power node, local area node, or hotspot. Alternatively, the small eNB may be a pico eNB configuring a pico cell, a femto eNB configuring a femto cell, HeNB, remote radio head (RRH), remote radio unit (RRU), remote radio equipment (RRE), or relay node (RN). Still alternatively, the small eNB may be a "local area base station" or "home base station" described in Non-Patent Document 7.

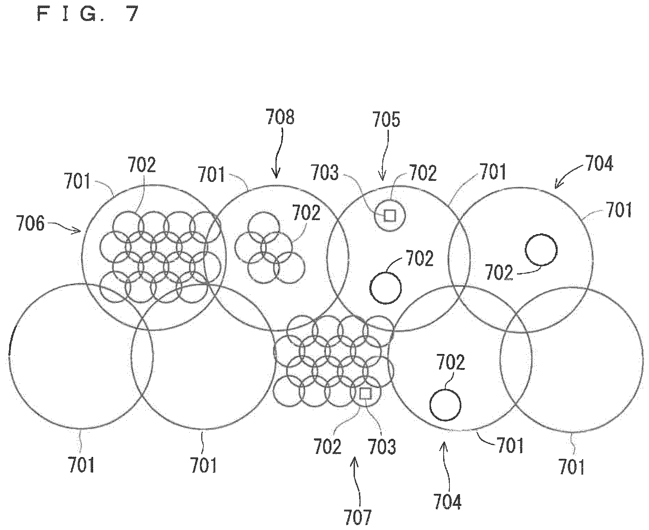

FIG. 7 shows the concept of the cell configuration in which macro eNBs and small eNBs coexist. The macro cell configured by a macro eNB has a relatively-wide-range coverage 701. A small cell configured by a small eNB has a coverage 702 whose range is narrower than that of the coverage 701 of a macro eNB (macro cell).

When a plurality of eNBs coexist, the coverage of the cell configured by an eNB may be included in the coverage of the cell configured by another eNB. In the cell configuration shown in FIG. 7, as indicated by a reference "704" or "705", the coverage 702 of the small cell configured by a small eNB may be included in the coverage 701 of the macro cell configured by a macro eNB

As indicated by the reference "705", the coverages 702 of a plurality of, for example, two small cells may be included in the coverage 701 of one macro cell. A user equipment (UE) 703 is included in, for example, the coverage 702 of the small cell and performs communication via the small cell.

In the cell configuration shown in FIG. 7, as indicated by a reference "706", the coverage 701 of the macro cell configured by a macro eNB may overlap the coverages 702 of the small cells configured by small eNBs in a complicated manner.

As indicated by a reference "707", the coverage 701 of the macro cell configured by a macro eNB need not overlap the coverages 702 of the small cells configured by small eNBs.

Further, as indicated by a reference "708", the coverages 702 of a large number of small cells configured by a large number of small eNBs may be configured in the coverage 701 of one macro cell configured by one macro eNB

In dual connectivity (DC), a master base station (master node; hereinafter also referred to as an MN in some cases) enquires of a secondary base station (secondary node; hereinafter also referred to as an SN in some cases) about a configuration of a secondary cell group (SCG) (hereinafter also referred to as SCG configuration in some cases) that is used for communication between the UE and the SN. The SN notifies the MN of the latest SCG configuration.

The above-mentioned SCG enquiry and SCG notification may be used in SN change. The MN may notify a change target SN of an SN addition request (SN Addition Request). The MN may include the latest SCG configuration acquired from a change source SN in the SN addition request. In this manner, for example, the change target SN can acquire the latest SCG configuration even if the change source SN has performed SCG configuration change for the UE. Therefore, inconsistency concerning the SCG configuration between the change target SN and the UE can be prevented after the secondary base station is changed. As a result, for example, malfunction of the UE can be prevented.

When the above-mentioned SCG configuration enquiry and/or SCG configuration notification is applied to a procedure other than the SN change, such as when a secondary cell group failure (hereinafter also referred to as SCG failure in some cases) occurs, the following problems occur. Specifically, the MN cannot detect occurrence of an SCG failure by itself, and thus the MN cannot enquire of the SN about the latest SCG configuration. In this manner, for example, the master base station is not informed of the latest SCG configuration when a secondary cell group failure (hereinafter also referred to as SCG failure in some cases) occurs, and thus there is a problem that an appropriate recovery process cannot be performed.

Solutions to the above problems are disclosed below.

The UE notifies the MN of the latest SCG configuration. The UE may perform the notification when an SCG failure occurs. The UE may include the notification in a notification of the SCG failure. The above-mentioned SCG failure notification may be SCG failure information (SCGfailureInformation) signaling.

The above-mentioned latest SCG configuration may be information related to a difference from the SCG configuration from the MN to the UE. The signaling amount in the Uu interface can be reduced. The above-mentioned information of the difference may be, for example, information related to the SCG configuration directly notified from the SN to the UE. For example, the processing amount in the UE can be reduced.

The UE may hold information related to the SCG configuration directly configured by the SN for the UE. For example, the UE may hold the information in an area different from that for other RRC configuration. The UE may update the information. The information update may be performed when, for example, the UE holds the information and the UE receives new SCG configuration. The UE may use the information in the above-mentioned notification of the latest SCG configuration for the MN. In this manner, for example, the UE can promptly notify the MN of the latest SCG configuration. Based on the use of the notification to the MN, the UE may or may not clear the information held in the UE.

As another example of a case where an SCG failure occurs, the enquiry about the latest SCG configuration from the MN to the SN may be performed based on a notification of the SCG failure from the UE to the MN. The SN may perform the latest SCG configuration for the MN, based on the above-mentioned enquiry.

The SCG configuration notification from the SN to the MN may be, for example, information related to a difference from the SCG configuration from the MN to the UE. The signaling amount in the inter-base station interface, for example, the X2/Xn interface, can be reduced. The same may hereinafter hold true in the first embodiment.

The MN may update the SCG configuration for the UE in the base station by using the SCG configuration notification. In this manner, for example, the MN can appropriately perform processing for the SCG failure by using the latest SCG configuration.

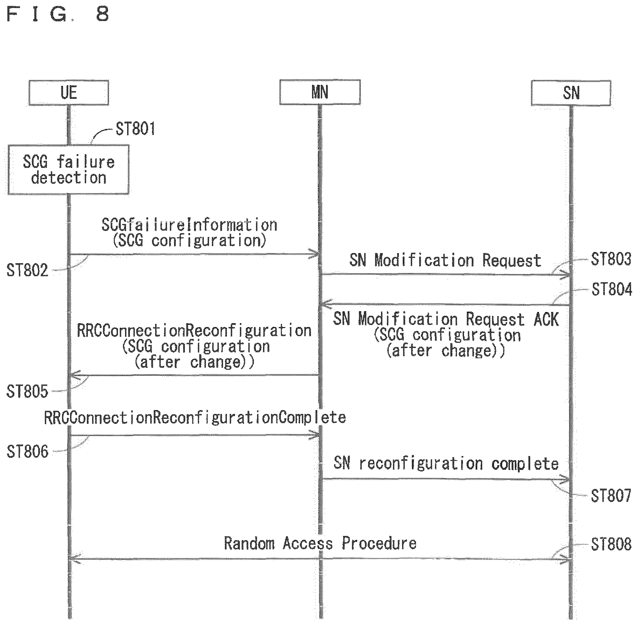

FIG. 8 is a diagram illustrating an example of a sequence in which the MN acquires the latest SCG configuration in the SCG failure. The example of FIG. 8 illustrates a sequence of a case where the UE notifies the MN of the latest SCG configuration. Further, the example of FIG. 8 illustrates a case where SCG configuration change is performed as a recovery process after the SCG failure.

In Step ST801, the UE detects an SCG failure. In Step ST802, the UE transmits an SCG failure notification to the MN. The UE includes information of the SCG configuration in communication between the UE and the SN in the notification, and thereby notifies the MN of the information. The above-mentioned information of the SCG configuration may be information of a difference for the SCG configuration performed for the UE by the MN. The above-mentioned information of the difference may be, for example, information related to the SCG configuration directly notified from the SN to the UE. In Step ST802, the MN acquires the latest SCG configuration.

In Step ST803, the MN notifies the SN of an SN modification request (SN Modification Request). The MN may include information related to the SCG configuration in the request. The above-mentioned information related to the SCG configuration may be, for example, information obtained after making a further change to the above-mentioned latest SCG configuration. In Step ST804, the SN notifies the MN of a positive response for the SN modification request (SN Modification Request Acknowledge). The response may include information related to SCG configuration change.

In Step ST805, the MN notifies the UE of RRC connection reconfiguration (RRCConnectionReconfiguration). The MN may include information related to the SCG configuration change in the notification. The above-mentioned information related to the SCG configuration change may be information acquired from the SN in Step ST804. Using Step ST805, the UE may perform the SCG configuration change.

In Step ST806, the UE notifies the MN of RRC connection reconfiguration complete (RRCConnectionReconfigurationComplete). In Step ST807, the MN notifies the SN of SN reconfiguration complete (SN reconfiguration complete). In Step ST808, random access processing is performed between the UE and the SN. In this manner, recovery from the SCG failure is completed by means of the SCG configuration change.

The SN may notify the MN of information related to the SCG failure. The notification may be performed when, for example, the SN detects excess in the number of times of downlink RLC retransmission, or when another condition for allowing the SN to detect the SCG failure is satisfied. In this manner, for example, the SCG failure can be promptly detected in the communication system while downlink communication from the SN to the UE is unavailable.

When the above-mentioned SCG configuration enquiry and/or SCG configuration notification is applied to a case where SCG failure occurrence is detected in the SN, problems similar to those in a case where SCG failure occurrence is detected in the UE occur. Specifically, the MN cannot detect occurrence of an SCG failure by itself, and thus the MN cannot enquire of the SN about the latest SCG configuration. In this manner, for example, the MN is not informed of the latest SCG configuration when the SN detects the SCG failure, and thus there is a problem that an appropriate recovery process cannot be performed.

As solutions for the above-mentioned problems, the enquiry about the latest SCG configuration from the MN to the SN may be performed based on a notification of the SCG failure from the SN to the MN. The SN may notify the MN of the latest SCG configuration. The notification may be performed after the above-mentioned enquiry.

As another example, the SN may include information related to the latest SCG configuration in the notification of the SCG failure information for the MN. The MN may update the SCG configuration that the MN holds, by using the information. In this manner, for example, the signaling amount required for the SCG configuration enquiry and/or the SCG configuration notification can be reduced.

As DC according to the first embodiment, the MN may be an eNB or a gNB. The SN may be an eNB or a gNB. A higher NW device may be an MME. A higher NW device may be an NG-Core, for example, an AMF or an SMF. The same may hereinafter hold true in the first embodiment.

When the above-mentioned SCG configuration enquiry and/or SCG configuration notification is applied to an SN initiated SN release (SN Release) procedure, the following problems occur. Specifically, in the procedure, the MN does not determine the SN release by itself, and thus the MN cannot initiate the enquiry about the latest SCG configuration for the SN. In this manner, for example, the MN is not informed of the latest SCG configuration when the SN determines release of the SN, and thus, for example, there is a problem that the MN cannot perform an appropriate change process from the SCG bearer to the MCG bearer.

As solutions for the above-mentioned problems, the enquiry about the latest SCG configuration from the MN to the SN may be performed based on a notification with an SN release request (SN Release Required) from the SN to the MN. The MN may include the enquiry in an SN release confirm (SN Release Confirm) notification for the SN. In this manner, for example, signaling in the inter-base station interface can be reduced. As another example, the MN may notify of the enquiry by using signaling different from that for SN release confirm. In this manner, for example, complexity in design in the SN release confirm signaling can be avoided.

The SN may notify the MN of the latest SCG configuration. The notification may be performed after the above-mentioned enquiry.

As another example, the SN may include information related to the latest SCG configuration in the notification with an SN release request (SN Release Required) for the MN. The MN may update the SCG configuration that the MN holds, by using the information. In this manner, for example, the signaling amount required for the SCG configuration enquiry and /or the SCG configuration notification can be reduced.

The above-mentioned SCG configuration notification from the SN to the MN may be, for example, information related to a difference from the SCG configuration from the MN to the UE. The signaling amount in the inter-base station interface, for example, the X2/Xn interface, can be reduced.

The MN may give a command of SN release to the UE by using the SCG configuration acquired from the SN. The command may include information related to bearer modification, for example. The above-mentioned bearer modification may be a change from the SCG bearer to the MCG bearer, for example. The MN may perform bearer modification by using the SCG configuration acquired from the SN. In this manner, for example, in the UE, changes of configuration associated with bearer modification can be reduced. As a result, the processing amount in the UE can be reduced.

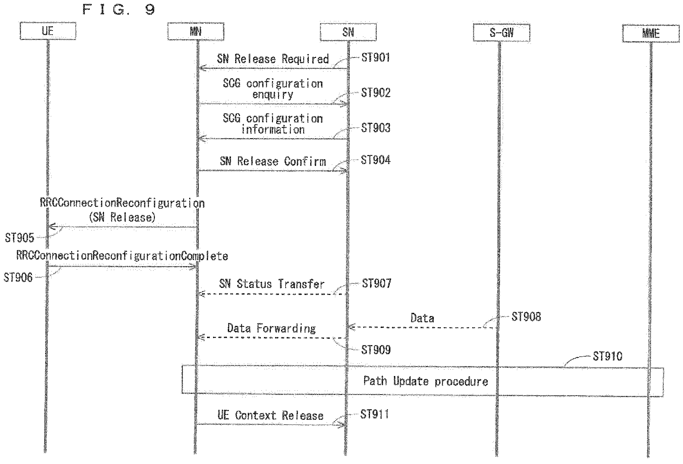

FIG. 9 is a diagram illustrating an example of a sequence in which the MN acquires the latest SCG configuration in SN initiated SN release. The example of FIG. 9 illustrates a case where the notification with an SN release request from the SN to the MN and the latest SCG configuration notification are performed using different signaling.

In Step ST901, the SN transmits a notification with an SN release request to the MN. In Step ST902, the MN transmits an SCG configuration enquiry to the SN. In Step ST903, the SN notifies the MN of the latest SCG configuration. In the SCG configuration notification, the SN may transmit, to the MN, only configuration details directly notified from the SN to the UE. In Step ST904, the MN notifies the SN of SN release confirm (SN Release Confirm).

In Step ST905, the MN notifies the UE of RRC connection reconfiguration (RRCConnectionReconfiguration). The MN includes information related to SN release in the notification. The MN may include information related to bearer modification in the notification. The above-mentioned bearer modification may be, for example, a change from the SCG bearer to the MCG bearer, or a change from the split bearer to the MCG bearer. Using Step ST905, the UE releases the SCG configuration. The UE may use all or a part of the SCG configuration as a part of the MCG configuration. In Step ST906, the UE notifies the MN of RRC connection reconfiguration complete (RRCConnectionReconfigurationComplete).

In Step ST907, the SN transfers a sequence number state to the MN (SN Status Transfer). In Step ST908, the S-GW transmits user data to the SN. In Step ST909, the SN forwards the user data received from the S-GW in Step ST908 to the MN. In Step ST910, the MN, the SN, the S-GW, and the MME update a communication path between the S-GW and the SN to a communication path between the S-GW and the MN. In Step ST911, the MN gives a command of UE context release to the SN. Using Step ST911, the SN releases a UE context.

FIG. 9 illustrates a case where the notification with an SN release request from the SN to the MN illustrated in Step ST901 and the latest SCG configuration notification illustrated in Step ST903 are performed using different signaling. However, Step ST901 and Step ST903 may be performed using the same signaling. In this case, the MN may not transmit the SCG configuration enquiry illustrated in Step ST902 to the SN. In this manner, for example, the signaling amount in the inter-base station interface can be reduced.

FIG. 9 illustrates a case where the SCG configuration enquiry illustrated in Step ST902 and SN release confirm illustrated in Step ST904 are performed using different signaling. However, Step ST902 and Step ST904 may be performed using the same signaling. In this case, the SN may perform the SCG configuration notification illustrated in Step ST903 after Step ST904. In this manner, for example, the signaling amount in the inter-base station interface can be reduced.

Other solutions are disclosed. The MN may perform the SCG configuration enquiry to the SN, based on SN release determination. The enquiry may be performed in an MN initiated SN release procedure. The enquiry may be included in an SN release request (SN Release Request) notification from the MN to the SN, or may be performed using signaling different from that for the SN release request notification. By including the enquiry in the SN release request notification, the signaling amount in the inter-base station interface, for example, the X2/Xn interface, can be reduced. By performing the enquiry before the SN release request, for example, the MN can appropriately determine whether or not there is SN release by using the latest SCG configuration.

The SCG configuration notification from the SN to the MN may be performed in an MN initiated SN release procedure. The notification may be, for example, performed after the SN release request from the MN to the SN. In the above description, even if the SN release request does not include information related to the SCG enquiry, the SN may notify the MN of the SCG configuration. In this manner, the signaling amount in the inter-base station interface, for example, the X2/Xn interface, can be reduced.

The above-mentioned SCG configuration notification from the SN to the MN may be, for example, information related to a difference from the SCG configuration from the MN to the UE. The signaling amount in the inter-base station interface, for example, the X2/Xn interface, can be reduced. The MN may give a command of SN release to the UE. The command may be performed after the SN release request from the MN to the SN, or may be performed after the above-mentioned SCG configuration notification from the SN to the MN. The UE releases the DC configuration with the SN by using the command.

The MN may notify the SN of information related to SN release cancel. The notification may be, for example, performed by using the SCG configuration that the MN receives from the SN. The SN may stop processing necessary for SN release, for example, forwarding of data from the higher NW device to the MN, by using the notification. The MN may not give a command of SN release to the UE, based on the SCG configuration received from the SN. In this manner, for example, the MN can reduce an unnecessary signaling amount and processing amount related to SN release.

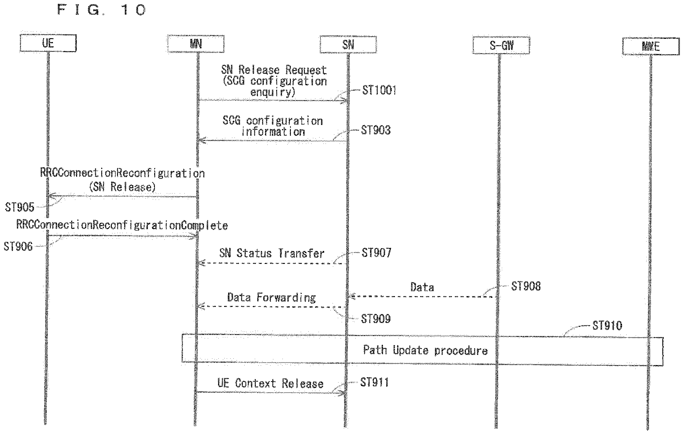

FIG. 10 is a diagram illustrating an example of a sequence in which the MN acquires the latest SCG configuration in MN initiated SN release. The example of FIG. 10 illustrates a case where the SCG configuration enquiry from the MN to the SN and the SN release request notification are performed using the same signaling. In FIG. 10, the signaling common to FIG. 9 is denoted by the same step number, and common description is omitted.

In Step ST1001, the MN transmits an SN release request (SN Release Request) to the SN. The MN may include information related to the latest SCG configuration enquiry in the request. In Step ST903, the SN notifies the MN of the latest SCG configuration. In the SCG configuration notification, the SN may transmit, to the MN, only configuration details directly notified from the SN to the UE.

Step ST905 to Step ST911 is common to FIG. 9, and thus description thereof is omitted.

FIG. 10 illustrates a case where information related to the latest SCG configuration enquiry is included in the SN release request from the MN to the SN illustrated in Step ST1001. However, the SN release request and the SCG configuration enquiry may be performed using different signaling. In this manner, for example, complexity in design in the MN and the SN can be avoided.

Further, FIG. 10 illustrates a case where information related to the latest SCG configuration enquiry is included in the SN release request from the MN to the SN illustrated in Step ST1001. However, the information related to the SCG configuration enquiry may not be included in Step ST1001. Even if the information related to the SCG configuration enquiry is not included in Step ST1001, the SN may perform the SCG configuration notification illustrated in Step ST903 to the MN. In this manner, for example, the signaling amount in the inter-base station interface can be reduced.

Further, FIG. 10 illustrates an example in which SN release is continued after the SCG configuration notification from the SN. However, the SN release may be cancelled. In the above description, the MN may notify the SN of information related to SN release cancel. In the SN release cancel, the sequence of ST905 and later steps of FIG. 10 may not be performed. In this manner, for example, in the communication system, an unnecessary signaling amount and processing amount related to SN release can be reduced.

Other solutions are disclosed. The MN may perform the SCG configuration enquiry to the SN, based on SN modification determination. The enquiry may be performed in an MN initiated SN modification procedure. In this manner, for example, inconsistency concerning the SCG configuration between the MN and the UE can be prevented. The enquiry may be included in an SN modification request (SN Modification Request) notification from the MN to the SN, or may be performed using signaling different from that for the SN modification request notification.

By including the enquiry in the SN modification request notification, the signaling amount in the inter-base station interface, for example, the X2/Xn interface, can be reduced. By performing the enquiry using signaling different from that for the SN modification request, for example, the MN can appropriately perform SCG configuration change by using the latest SCG configuration.

In the SN modification request notification from the MN to the SN, the SCG configuration to be changed by the MN may be stored in an area different from that for the SCG configuration not to be changed by the MN. By using the SCG configuration stored in the different area in the notification, for example, the SN may extract information of the SCG configuration already notified from the SN to the UE from a difference between the SCG configuration included in the notification and the SCG configuration held by the SN.

In this manner, for example, in the SCG configuration notified from the MN to the SN, the SN can distinguish the SCG configuration changed by the MN and the SCG configuration already notified from the SN to the UE. As a result, inconsistency concerning the SCG configuration among the three entities of the MN, the SN, and the UE can be prevented, and malfunction in the communication system can be prevented.

In the above description, the SN modification request notification from the MN to the SN may include information related to the SCG failure. The SCG configuration enquiry notification may include information related to the SCG failure. In this manner, for example, the SN can appropriately perform recovery operation from the SCG failure.

The SCG configuration notification from the SN to the MN may be performed in an MN initiated SN modification procedure. The notification may be, for example, performed after the SN modification request from the MN to the SN. In the modification request from the MN to the SN, even if information related to the SCG configuration enquiry is not included, the SCG configuration notification from the SN to the MN may be performed. The notification may be included in an SN modification request positive response (SN Modification Request Acknowledge) from the SN to the MN, or may be performed using signaling different from that for the SN modification request positive response. The above-mentioned SCG configuration notification from the SN to the MN may be, for example, information related to a difference from the SCG configuration from the MN to the UE, in a similar manner to the MN initiated SN release. The signaling amount in the inter-base station interface, for example, the X2/Xn interface, can be reduced.

In the SCG configuration notification from the SN to the MN, both the SCG configuration already directly notified from the SN to the UE and the SCG configuration to be changed in the SN modification procedure may be included. Both the SCG configurations may be stored in areas different from each other. In the command of SN modification to the UE, the MN may extract the SCG configuration to be changed in the SN modification procedure from the SCG configuration notification, and notify the UE of the extracted SCG configuration. In this manner, for example, the MN can promptly notify the UE of an SN modification command.

The SN may notify the MN of information indicating that SN modification is unnecessary. The notification may be, for example, performed when SCG configuration details included in the SN modification request from the MN to the SN are the same as SCG configuration details already directly notified from the SN to the UE. The information may be included in an SN modification request positive response from the SN to the MN, or may be included in an SN modification request reject (SN Modification Reject) from the SN to the MN. The above-mentioned information indicating causes included in the SN modification request reject may include information indicating that the SCG configuration has already been directly notified from the SN to the UE. Alternatively, the information indicating causes may include information indicating that the SCG configuration has already been configured for the UE.

The MN may give a command of SN release to the UE. The command may be performed using RRC connection reconfiguration (RRCConnectionReconfiguration) signaling. The command may include information related to SCG configuration change details. The command may be performed after the SCG configuration notification from the SN to the MN, or may be performed after an SN modification request positive response from the SN to the MN. The UE changes the SCG configuration to be used for connection with the SN, by using the command.

Alternatively, the MN may notify the SN of another SN modification request again. For example, when the MN changes the SCG configuration to be notified to the UE again by using the SCG configuration notification from the SN, the above-mentioned another notification may be performed. The SCG configuration included in the above-mentioned another notification may be different from the SCG configuration included in the first notification. The above another SN modification request notification from the MN to the SN may be performed after a notification of information indicating that SN change from the SN to the MN is unnecessary, or may be performed after a notification of the SN modification request positive response and/or the latest SCG configuration notification from the SN to the MN. In this manner, for example, when the MN performs further SCG configuration by using the latest SCG configuration, quality in connection between the UE and the SN can be enhanced.

Alternatively, the MN may not give a command of SN release to the UE. The MN may not give a command of SN release to the UE after a notification of information indicating that SN modification from the SN to the MN is unnecessary. In this manner, for example, the signaling amount in the radio interface (for example, the Uu interface) between the MN and the UE can be reduced.

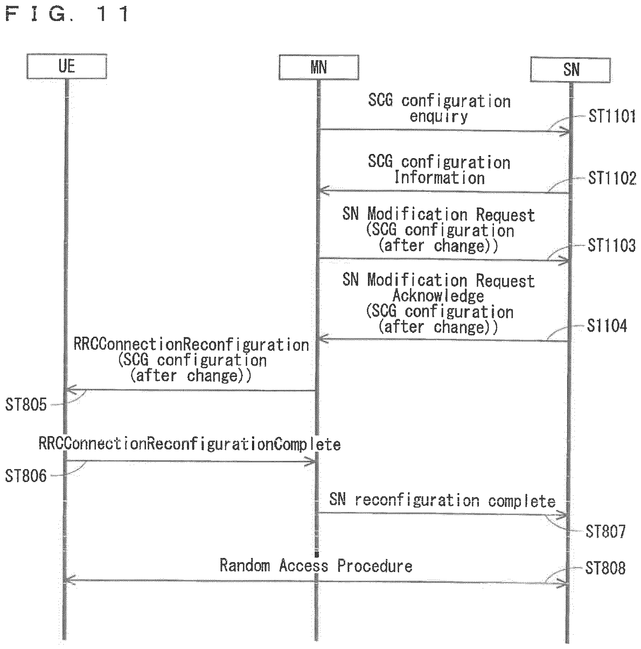

FIG. 11 is a diagram illustrating an example of a sequence in which the MN acquires the latest SCG configuration in MN initiated SN modification. The example of FIG. 11 illustrates a case where the SCG configuration enquiry from the MN to the SN and the SN release request notification are performed using different signaling. In FIG. 11, the signaling common to FIG. 8 is denoted by the same step number, and common description is omitted.

In Step ST1101, the MN notifies the SN of an SCG configuration enquiry. In Step ST1102, the SN notifies the MN of SCG configuration information. The above-mentioned SCG configuration notification from the SN to the MN may be, for example, information related to a difference from the SCG configuration from the MN to the UE. The signaling amount in the inter-base station interface, for example, the X2/Xn interface, can be reduced. The MN determines SCG configuration after change, by using the SCG configuration information.

In Step ST1103, the MN notifies the SN of an SN modification request (SN Modification Request). The request includes the SCG configuration after change. In Step ST1104, the SN notifies the MN of an SN modification request positive response (SN Modification Request Acknowledge). The request may include the SCG configuration after change. Alternatively, the request may include configuration obtained after making a further change to the SCG configuration after change that is determined by the MN

In Step ST805, the MN gives a command of SN modification to the UE. The command includes the SCG configuration after change. The command may include configuration obtained after the SN makes a further change to the SCG configuration after change that is determined by the MN

Step ST806 to Step ST808 is common to FIG. 8, and thus description thereof is omitted.

FIG. 11 illustrates an example in which the SCG configuration enquiry illustrated in Step ST1101 and the SN modification request illustrated in Step ST1103 are notified as different signaling. However, these may be notified as the same signaling. Further, an example in which the SCG configuration notification illustrated in Step ST1102 and the SN modification request positive response illustrated in Step ST1104 are notified as different signaling is illustrated. However, these may be notified as the same signaling. In this manner, for example, the signaling amount in the inter-base station interface, for example, the X2/Xn interface, can be reduced.

Other solutions are disclosed. The SCG configuration notification from the SN to the MN may be performed based on its SN modification (SN Modification) determination in the SN. The notification may be included in a notification with an SN modification request (SN Modification Required) from the SN to the MN, or the notification with an SN modification request may be, for example, a notification in an SN initiated SN modification procedure. In this manner, for example, the signaling amount in the inter-base station interface can be reduced. As another example, the MN may notify of the enquiry by using signaling different from that for SN release confirm. In this manner, for example, complexity in design in the SN release confirm signaling can be avoided. The SCG configuration notification from the SN to the MN may be performed in an MN initiated SN modification procedure.

Other solutions are disclosed. The SCG configuration notification from the SN to the MN may be performed based on its SN modification (SN Modification) determination in the SN. The notification may be included in a notification with an SN modification request (SN Modification Required) from the SN to the MN, or may be performed using signaling different from that for the notification with an SN modification request. The above-mentioned notification with an SN modification request may be signaling in an SN initiated SN modification procedure. The MN may give a notification of SN modification command to the UE. The command may include the SCG configuration. The UE may change the SCG configuration by using the command.

The above-mentioned SCG configuration notification from the SN to the MN may consist of a plurality of information groups. The SN may allocate the SCG configuration already directly notified from the SN to the UE and the SCG configuration determined to be changed in the SN initiated SN modification procedure into different information groups. The MN may notify the UE of the SCG configuration determined to be changed in the SN initiated SN modification procedure by using the information groups. For example, the MN may notify the UE only of the above-mentioned information group that includes the SCG configuration determined to be changed in the SN. In this manner, for example, the signaling amount in the SN modification command from the MN to the UE can be reduced. Further, for example, in the MN, the processing amount required for generation of SCG configuration details to be notified to the UE can be reduced.

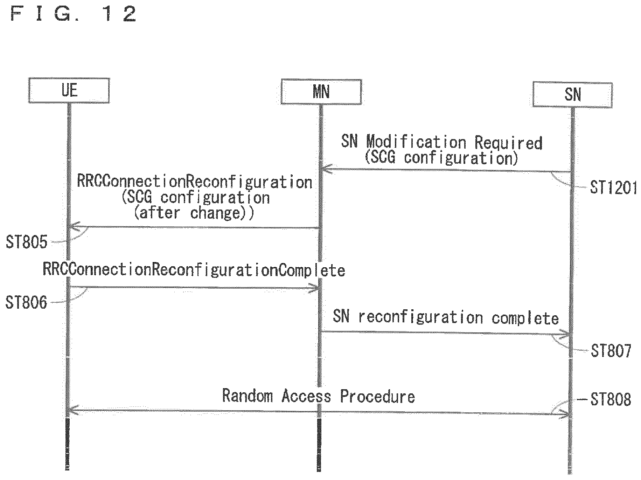

FIG. 12 is a diagram illustrating an example of a sequence in which the MN acquires the latest SCG configuration in SN initiated SN modification. FIG. 12 illustrates an example in which the SCG configuration notification from the SN to the MN and the notification with an SN modification request are performed using the same signaling. In FIG. 12, the signaling common to FIG. 8 is denoted by the same step number, and common description is omitted.

In Step ST1201, the SN performs a notification with an SN modification request to the MN. The notification may include information related to the SCG configuration. The MN acquires the latest SCG configuration by using the notification.

The information of the SCG configuration in Step ST1201 may consist of a plurality of information groups. The SN may allocate the SCG configuration already directly notified from the SN to the UE and the SCG configuration determined to be changed in the SN initiated SN modification procedure into different information groups. The MN may perform an SN modification command to the UE in Step ST805 by using the information groups.

Step ST806 to Step ST808 is common to FIG. 8, and thus description thereof is omitted.

FIG. 12 illustrates an example in which the SCG configuration notification from the SN to the MN and the notification with an SN modification request are performed using the same signaling. However, these may be performed using different signaling. For example, the MN may perform the SN modification command to the UE in Step ST805 by using both the notification with an SN modification request and the SCG configuration notification. In this manner, for example, the MN can promptly determine a change point of the SCG configuration that is to be notified to the UE.

Other solutions are disclosed. The MN may perform the SCG configuration enquiry to the SN, based on a handover of the master base station. The handover may be, for example, an inter-MN handover without SN change (Inter-MN Handover without SN change). In a similar manner, the SCG configuration information notification from the SN to the MN may also be performed in a handover of the master base station. The handover may be, for example, an inter-MN handover without SN change (Inter-MN Handover without SN change). In this manner, for example, a change target MN can determine whether the SN can be maintained by using the latest SCG configuration. As a result, for example, communication quality between the SN and the UE can be secured.

A source MN may perform the enquiry before a handover request (Handover Request) for a target MN. The SN may notify the source MN of the latest SCG configuration. The source MN may update the SCG configuration that the MN holds, by using the SCG configuration. The source MN may perform the handover request to the target MN. The request may include the SCG configuration updated by the source MN described above. The target MN may determine whether the SN can be maintained by using the SCG configuration included in the request.

The source MN may include information related to the target MN in the enquiry to the SN. The information may be information including, for example, an identifier of the target MN (for example, a base station ID) or an identifier of a PCell of the target MN (for example, a physical cell identifier). The SN may notify the target MN of the SCG configuration by using the information. The SCG configuration notification from the SN to the target MN may be performed before SN addition positive response (SN Addition Acknowledge) signaling, may be included in the SN addition positive response signaling, or may be performed after the SN addition positive response.

The source MN may perform the handover request to the target MN. The request may include the SCG configuration that the source MN holds. The target MN may update the SCG configuration in the MN, by using the SCG configuration included in the request from the source MN and the SCG configuration notified from the SN. The target MN may determine whether the SN can be maintained by using the above-mentioned updated SCG configuration.

As another example, the target MN may perform the enquiry to the SN. The target MN may perform the enquiry after the handover request (Handover Request) from the source MN. The target MN may perform the enquiry to the SN before SN addition (SN Addition) from the target MN to the SN, may include the enquiry in SN addition signaling, or may perform the enquiry after SN addition. The SN may notify the target MN of the SCG configuration.

The SCG configuration notification from the SN to the target MN may be performed before SN addition positive response (SN Addition Acknowledge) signaling, may be included in the SN addition positive response signaling, or may be performed after the SN addition positive response. The target MN may update the SCG configuration that the MN holds, by using the notification. The target MN may determine whether the SN can be maintained by using the above-mentioned updated SCG configuration.

In the above description, even if information related to the SCG enquiry is not included in the SN addition signaling from the target MN to the SN, the SN may notify the target MN of the latest SCG configuration. The same may hold true even in a case where there is no SCG configuration enquiry from the target MN to the SN. In this manner, the signaling amount in the inter-base station interface, for example, the X2/Xn interface, can be reduced. The SN may determine the UE to be a target of the SCG configuration, by using information related to the UE included in the SN addition notification from the target MN

The target MN may notify the source MN of the SCG configuration. The SCG configuration may be SCG configuration using configuration notified from the SN to the source MN or to the target MN, or may be SCG configuration using configuration obtained after the target MN makes a further change to the configuration that is notified from the SN to the source MN or to the target MN. The SCG configuration notification from the target MN to the source MN may be notified before handover request positive response (Handover Request Acknowledge) signaling, or may be notified after the handover request positive response signaling.

Alternatively, the SCG configuration notification from the target MN to the source MN may be included in the handover request positive response signaling. In this manner, for example, the signaling amount due to the SCG configuration notification in the inter-base station interface (for example, the X2/Xn interface) can be reduced.

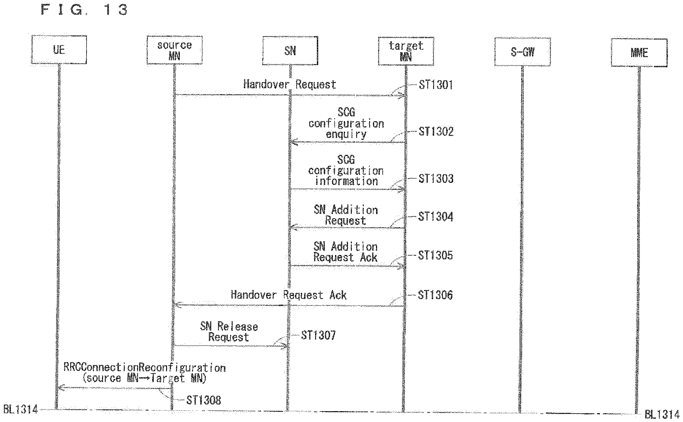

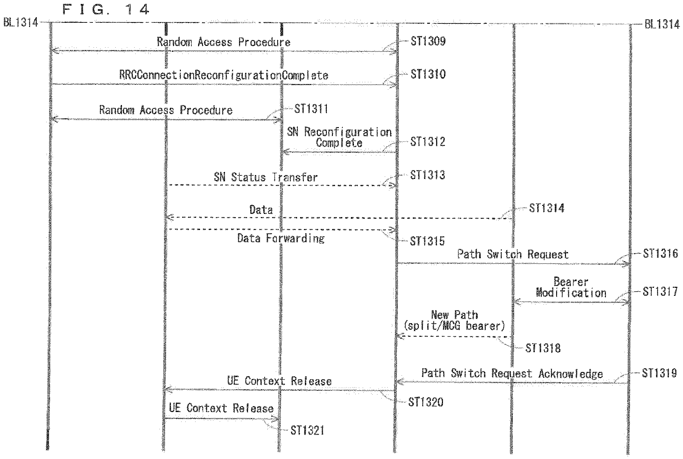

FIG. 13 and FIG. 14 are diagrams illustrating an example of a sequence in which the target MN acquires the latest SCG configuration in the inter-MN handover without SN change. FIG. 13 and FIG. 14 are connected at the border line BL1314. FIG. 13 and FIG. 14 illustrate an example in which the SCG configuration enquiry from the target MN to the SN and the SN addition request are performed using different signaling. Further, FIG. 13 and FIG. 14 illustrate an example in which the SCG configuration notification from the SN to the target MN and an SN addition request positive response notification are performed using different signaling.

In Step ST1301, the source MN notifies the target MN of a handover request. In Step ST1302, the target MN enquires of the SN about the latest SCG configuration. In Step ST1303, the SN notifies the target MN of the latest SCG configuration. The target MN updates the SCG configuration using Step ST1301 and Step ST1303, and also determines whether the SN can be maintained. The example of FIG. 13 and FIG. 14 illustrates a case where the SN is maintained.

In Step ST1304, the target MN notifies the SN of an SN addition request. In Step ST1305, the SN notifies the target MN of an SN addition request positive response. In Step ST1306, the target MN notifies the source MN of a handover request positive response. The notification of Step ST1306 may include the latest SCG configuration, or may include the MCG configuration used for connection between the target MN and the UE.

In Step ST1307, the source MN notifies the SN of an SN release request. The SN release request of Step ST1307 may not include information related to the SCG enquiry. The SN may not notify the source MN of the SCG configuration. In this manner, for example, the signaling amount in the inter-base station interface can be reduced.

In Step ST1308, the source MN gives a command of MN change to the UE. For the command, RRC connection reconfiguration signaling may be used. The command may include information related to the SCG configuration. The above-mentioned SCG configuration may be, for example, information using SCG configuration obtained after the target MN makes a further change to the SCG configuration that is notified from the SN to the target MN. The UE changes a connection target master base station from the source MN to the target MN by using the command.

In Step ST1309, the UE performs random access processing with the target MN In this manner, synchronization between the UE and the target MN is established. In Step ST1310, the UE notifies the target MN of MN change complete. For the notification, RRC connection reconfiguration complete signaling may be used. In Step ST1311, the UE performs random access processing with the SN. In this manner, synchronization between the UE and the SN is established. In Step ST1312, the target MN notifies the SN of SN reconfiguration complete (SN Reconfiguration Complete).

In Step ST1313, the source MN transfers a sequence number state to the target MN (SN Status Transfer). In Step ST1314, the S-GW transmits user data to the source MN In Step ST1315, the source MN forwards the user data received from the S-GW in Step ST1314 to the target MN

Step ST1316 to Step ST1319 illustrates a path switch procedure among the target MN, the S-GW, and the MME. In Step ST1316, the target MN notifies the MME of a path switch request (Path Switch Request). In Step ST1317, bearer modification (Bearer Modification) is performed between the S-GW and the MME. In Step ST1318, user data is transmitted on a new path from the S-GW to the target MN. In Step ST1319, the MME notifies the target MN of a path switch request positive response (Path Switch Request Acknowledge).

In Step ST1320, the target MN gives a command of UE context release (UE Context Release) to the source MN. In Step ST1321, the source MN gives a command of UE context release to the SN. The source MN releases a UE context using Step ST1320. Using Step ST1321, the SN releases the UE context associated with the source MN

FIG. 13 and FIG. 14 illustrate an example in which the SCG configuration enquiry from the target MN to the SN and the SN addition request are performed using different signaling. However, these may be performed using the same signaling. Further, FIG. 13 and FIG. 14 illustrate an example in which the SCG configuration notification from the SN to the target MN and the SN addition request positive response notification are performed using different signaling. However, these may be performed using the same signaling. In this manner, for example, the signaling amount in the inter-base station interface can be reduced.

FIG. 13 and FIG. 14 illustrate an example of a higher NW configured using an S-GW and an MME. However, the sequence illustrated in FIG. 13 and FIG. 14 may be applied to a case using an NG core, i.e., a higher NW configured using a UPF and an AMF. For example, in the above description, the S-GW may be replaced with a UPF, and the MME may be replaced with an AMF. Further, in the above description, the path switch request illustrated in Step ST1316 may be replaced with a PDU session path switch request (PDU Session Path Switch Request). Further, in the above description, the path switch request positive response illustrated in Step ST1319 may be replaced with a PDU session path switch request positive response (PDU Session Path Switch Request Acknowledge). In this manner, even if the higher NW device is an NG core, an effect similar to that in a case of the higher NW configured using the S-GW and the MME can be achieved.

Other solutions are disclosed. The MN may perform the SCG configuration enquiry to the SN, based on MN-to-eNB/gNB change (MN to eNB/gNB change). In a similar manner, the SCG configuration information notification from the SN to the MN may also be performed in an MN-to-eNB/gNB change (MN to eNB/gNB change) procedure. The procedure may be, for example, a procedure of releasing the DC configuration when a UE connection target using the DC configuration shifts from the MN to another base station through a handover. In this manner, for example, the bearer configured in the SCG can be handed over to the target base station at the time of SN release. As a result, the processing amount in the UE in the handover can be reduced.

In the MN-to-eNB/gNB change, the source MN can perform the enquiry to the SN. The source MN may perform the enquiry before the handover request (Handover Request) to the target base station. The SN may notify the source MN of the latest SCG configuration. The source MN may update the SCG configuration that the MN holds, by using the SCG configuration. The source MN may perform the handover request to the target base station. The request may include the SCG configuration updated by the source MN described above. The target base station may determine the configuration to be used for connection with the UE, by using the SCG configuration included in the request.

The source MN may include information related to the target base station in the enquiry to the SN. The information may be, for example, information including an identifier of the target base station or an identifier of a PCell of the target base station (for example, a physical cell identifier). The SN may notify the target base station of the SCG configuration by using the information. The source MN may perform the handover request to the target base station. The request may include the SCG configuration that the source MN holds. The target base station may update the SCG configuration in the MN, by using the SCG configuration included in the request from the source MN and the SCG configuration notified from the SN. The target base station may determine the configuration to be used for connection with the UE, by using the above-mentioned updated SCG configuration.

As another example, the target base station may perform the enquiry to the SN. The target base station may perform the enquiry after the handover request (Handover Request) from the source MN. The SN may notify the target base station of the SCG configuration. The target base station may update the SCG configuration that the base station holds, by using the notification. The target base station may determine the configuration to be used for connection with the UE, by using the above-mentioned updated SCG configuration.

The target base station may notify the source MN of the SCG configuration. The SCG configuration may be SCG configuration using configuration notified from the SN to the source MN or to the target base station, or may be SCG configuration using configuration obtained after the target base station makes a further change to the configuration that is notified from the SN to the source MN or to the target base station. The SCG configuration notification from the target base station to the source MN may be notified before handover request positive response (Handover Request Acknowledge) signaling, or may be notified after the handover request positive response signaling.

Alternatively, the SCG configuration notification from the target base station to the source MN may be included in the handover request positive response signaling. In this manner, for example, the signaling amount due to the SCG configuration notification in the inter-base station interface (for example, the X2/Xn interface) can be reduced.

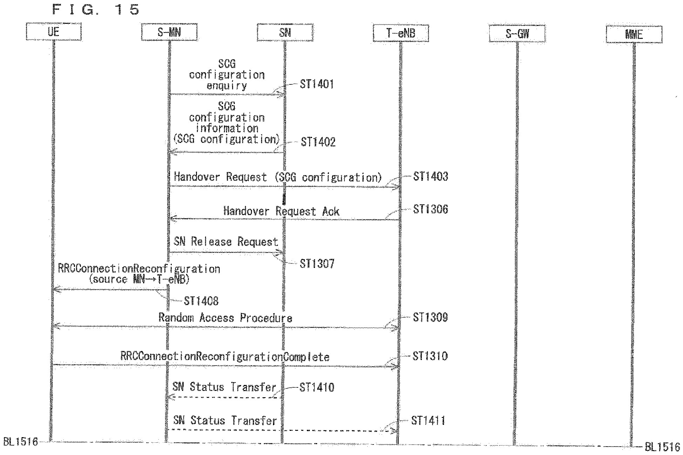

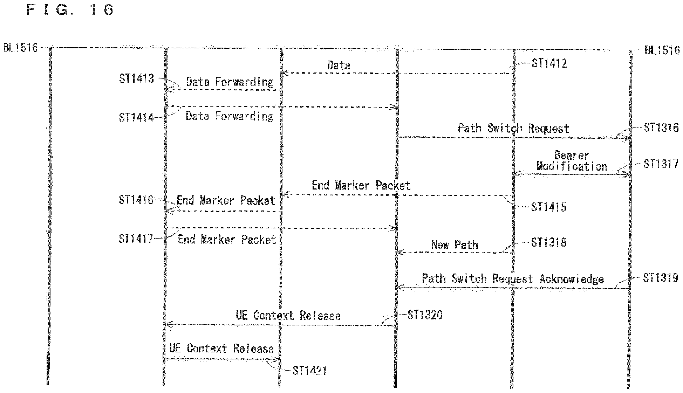

FIG. 15 and FIG. 16 are diagrams illustrating an example of a sequence in which the source MN (S-MN) acquires the latest SCG configuration in MN-to-eNB change. FIG. 15 and FIG. 16 are connected at the border line BL1516. FIG. 15 and FIG. 16 illustrate an example in which, before the handover request, the source MN performs the SCG configuration enquiry to the SN, and the SN performs the SCG configuration notification to the source MN. In FIG. 15 and FIG. 16, signaling common to FIG. 13 and FIG. 14 is denoted by the same step number, and common description is omitted.

In Step ST1401, the source MN enquires of the SN about the latest SCG configuration. In Step ST1402, the SN notifies the source MN of the latest SCG configuration. The source MN updates the SCG configuration using Step ST1401 and Step ST1402. In Step ST1403, the source MN notifies the target base station (T-eNB) of a handover request. In Step ST1403, the handover request may include the latest SCG configuration acquired from the SN. The target base station may determine not to use the secondary base station, by using the SCG configuration included in Step ST1403.

Step ST1306 and Step ST1307 are similar to FIG. 13, and thus description thereof is omitted.

In Step ST1408, the source MN gives a command of base station change to the UE. For the command, RRC connection reconfiguration signaling may be used. The command may include information related to the SCG configuration. The above-mentioned SCG configuration may be, for example, information using SCG configuration obtained after the target base station makes a further change to the SCG configuration that is notified from the SN to the target base station via the source MN. The UE changes a connection target base station from the source MN to the target base station by using the command.

Step ST1309 and Step ST1310 are similar to FIG. 14, and thus description thereof is omitted.

In Step ST1410, the SN transfers a sequence number state to the source MN (SN Status Transfer). The sequence number state of Step ST1410 may be a sequence number state of user data transmitted and received using the SCG, for example. In Step ST1411, the source MN transfers the sequence number state to the target base station. The sequence number state of Step ST1411 may, for example, include a sequence number state of Step ST1410, or include a sequence number state of user data transmitted and received using the MCG.

In Step ST1412, the S-GW transmits user data to the SN. In Step ST1413, the SN forwards the user data received from the S-GW in Step ST1412 to the source MN. In Step ST1414, the source MN forwards the user data received from the SN in Step ST1413 to the target base station.

Step ST1316 and Step ST1317 are similar to FIG. 14, and thus description thereof is omitted.

In Step ST1415, the S-GW transmits, to the SN, an end marker packet including information indicating the last piece of user data using a path using the SN. In Step ST1416, the SN forwards the end marker packet received from the S-GW in Step ST1415 to the source MN. In Step ST1417, the source MN forwards the end marker packet received from the SN in Step ST1416 to the target base station.

Step ST1318 to Step ST1320 is similar to FIG. 14, and thus description thereof is omitted.

In Step ST1421, the source MN gives a command of UE context release to the SN. Using Step ST1421, the SN releases a UE context.

FIG. 15 and FIG. 16 illustrate an example in which the target MN performs the SCG configuration enquiry. However, the source base station may perform the SCG configuration enquiry to the SN. In the above description, the SN may notify the target base station of the latest SCG configuration. In this manner, for example, the target base station can appropriately determine whether the SN can be released. As a result, efficiency in the communication system is enhanced.

FIG. 15 and FIG. 16 illustrate an example in which the target base station is an eNB. However, the target base station may be a gNB (T-gNB). Further, FIG. 15 and FIG. 16 illustrate an example of a higher NW configured using an S-GW and an MME However, the sequence illustrated in FIG. 15 and FIG. 16 may be applied to a case using an NG core, i.e., a higher NW configured using a UPF and an AMF. For example, in the above description, the S-GW may be replaced with a UPF, and the MME may be replaced with an AMF.

Further, in the above description, the path switch request illustrated in Step ST1316 may be replaced with a PDU session path switch request (PDU Session Path Switch Request). Further, in the above description, the path switch request positive response illustrated in Step ST1319 may be replaced with a PDU session path switch request positive response (PDU Session Path Switch Request Acknowledge). In this manner, even if the higher NW device is an NG core, an effect similar to that in a case of the higher NW configured using the S-GW and the MME can be achieved.

Other solutions are disclosed. The MN may perform the SCG configuration enquiry to the SN, based on a handover in which both the MN and the SN are changed. In a similar manner, the SCG configuration information notification from the SN to the MN may also be performed in the handover. In this manner, for example, the target MN can appropriately configure the SCG configuration of the target SN by using the latest SCG configuration. As a result, for example, communication quality between the target SN and the UE can be secured.

If the SCG configuration enquiry from the MN to the SN and/or the SCG configuration information notification from the SN to the MN is applied to the handover in which both the MN and the SN are changed, a method similar to that in the inter-MN handover without SN change procedure may be used, or a method similar to that in the MN-to-eNB/gNB change procedure may be used. In this manner, for example, complexity in design in the communication system can be avoided.

According to the first embodiment, even if SN change does not occur, inconsistency concerning the SCG configuration among the UE, the MN, and the SN can be prevented. As a result, malfunction in the communication system can be prevented.

### Second Embodiment

As a notification method of the SCG failure information from the UE to the master base station using a bearer including a plurality of transmission paths in the radio interface from the UE for uplink C-Plane data transmission, i.e., a UL split SRB, the UE may initiate RRC connection re-establishment. Alternatively, the UE may autonomously change the transmission path of uplink split SRB1 from the SCG to the MCG. The above-mentioned notification method of the SCG failure information may be applied to a case where the use of the SCG is configured as the transmission path of UL split SRB1.

The above-mentioned transmission path change of the uplink split bearer may be applied to uplink split SRB2 and/or an uplink split DRB.

When the above-mentioned method is applied, the following problems occur. Specifically, the UE performs reconnection with the MCG as well as the SCG through RRC connection re-establishment, and thus time takes before the completion of RRC connection re-establishment. Further, during reconnection between the UE and the MCG, user data communication between the UE and the MCG stops. As a result, there is a problem that the user data communication stops due to SCG failure even when the user data communication between the UE and the MCG is normally performed.

Further, when the UE autonomously changes the transmission path of uplink split SRB1, signaling transmitted using SRB1, for example, a measurement result report (MeasurementReport) and others, is all transmitted to the MCG. As a result, signaling transmitted using SRB1 is also transmitted to the MCG, and thus SCG failure information notification from the UE to the MCG takes time. As a result, there is a problem that recovery from the SCG failure in the communication system takes time.

Solutions to the above problems are disclosed below.

Only SCG failure information signaling enables an automatic change of a transmission destination base station in the UE. The change may be, for example, a change to the MCG, or a change to packet duplication. As another example, the change may be enabled according to a type of SRB 1 signaling (for example, RRC connection reconfiguration). In a similar manner, the change may also be enabled for SRB2 according to a type of signaling.

The above-mentioned other signaling may be signaling using SRB1 and/or SRB2. Whether the transmission destination base station change can be performed in the UE may be determined for each signaling. For example, whether the change can be performed may be defined in a standard in advance for each signaling. In this manner, for example, the UE can promptly notify the MCG of the SCG failure information even if other signaling occurs in the UE.

For example, the UE may change the SCG failure information transmission destination from the SCG to the MCG. The above-mentioned change may be applied to a case where the transmission destination of split SRB1 in the UE is configured to the SCG. The UE may notify the MN of SCG failure information signaling.

The MN may configure the transmission destination of split SRB1 and/or split SRB2 in the UE to the MCG by using the signaling received from the UE. As another example, based on the signaling reception, the MN may perform procedures such as SN change, SN release, and SN modification. As another example, based on the signaling reception, the MN may perform the SCG configuration enquiry disclosed in the first embodiment.

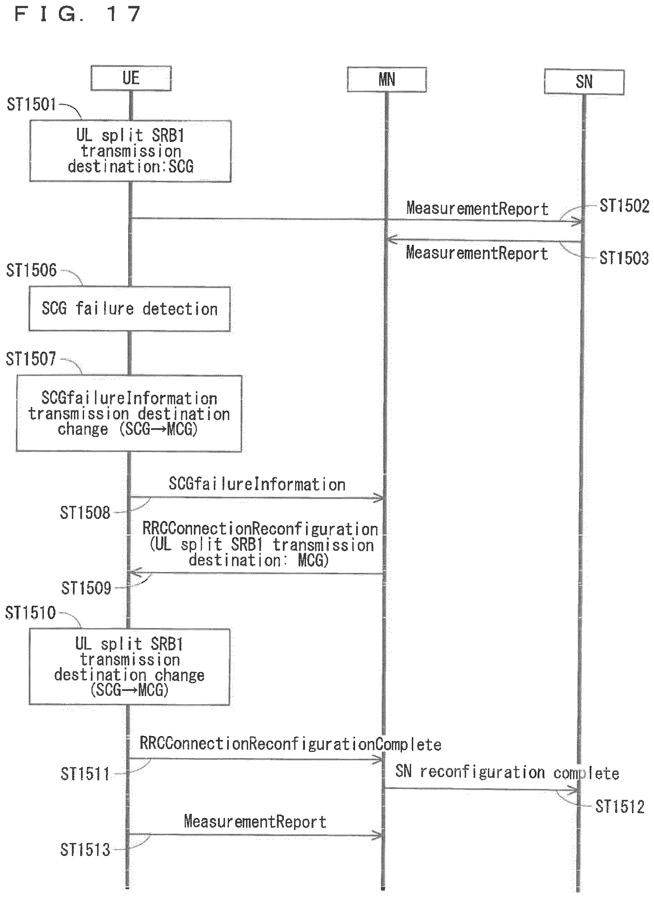

FIG. 17 is a sequence diagram illustrating an example of operation of autonomously changing a notification target base station of the SCG failure information in occurrence of SCG failure. FIG. 17 illustrates an example in which the SCG is configured as a transmission destination of UL split SRB1.

In Step ST1501, the transmission destination of UL split SRB1 in the UE is configured to the SCG. In Step ST1502, the UE transmits a measurement result report (Measurement Report) to the SN. In Step ST1503, the SN forwards the measurement result report received from the UE in Step ST1502 to the MN

In FIG. 17, the UE detects SCG failure in Step ST1506. In Step ST1507, the UE changes the transmission destination of SCG failure information signaling from the SCG to the MCG. In Step ST1508, the UE notifies the MN of the SCG failure information.

In Step ST1509, the MN configures, for the UE, the transmission destination of UL split SRB1 to the MCG. For the configuration, for example, RRC connection reconfiguration signaling may be used. In Step ST1510, the UE changes the transmission destination of UL split SRB1 to the MCG. In Step ST1511, for the MN, the UE notifies the MN of information indicating that the transmission destination change of UL split SRB1 is completed. For the notification, for example, RRC connection reconfiguration complete (RRCConnectionReconfigurationComplete) signaling may be used. In Step ST1512, the MN notifies the SN of SN reconfiguration complete. In Step ST1513, the UE transmits a measurement result report to the MN

In the second embodiment, in the transmission destination configuration in the UL split bearer, a transmission destination may be determined by using or without using information related to a buffer storage amount of the UE. For example, the configured transmission destination may be a transmission destination configured using information related to a buffer storage amount of the PDCP and RLC layers of the UE described in Non-Patent Document 16 (3GPP TS 38.323 V1.0.1), or may be a transmission destination determined without using the information. By using the configuration in which a transmission destination is determined without using the information, for example, control in the communication system can be facilitated.

Other solutions are disclosed. Regarding the SCG failure information signaling, packet duplication in the UE is enabled. The packet duplication may use DC. Packet duplication may also be enabled in other signaling. The above-mentioned other signaling may be signaling using SRB1 and/or SRB2. Whether packet duplication can be performed in the UE may be determined for each signaling. For example, whether packet duplication can be performed may be defined in a standard in advance for each signaling. In this manner, for example, the UE can promptly notify the MN of the SCG failure information even if other signaling occurs in the UE.

Other solutions are disclosed. The SCG failure information signaling is transmitted using another SRB. For example, for transmission of the SCG failure information signaling, SRB0 may be used, or SRB2 may be used. SRB2 may be split SRB2, or may be non-split SRB2. The use of the above-mentioned split SRB2 may be, for example, applied when the MCG is configured as the transmission destination of the split SRB2. The above-mentioned another SRB capable of transmitting the SCG failure information signaling may be defined in a standard in advance. In this manner, for example, the UE can promptly notify the MN of the signaling even if a transmission buffer storage amount related to SRB1 in the UE is large.

Other solutions are disclosed. The UE may include information related to SCG failure in RRC connection re-establishment signaling. The information may, for example, include an identifier indicating that SCG failure has occurred, or may include a part or all of information of the SCG failure information signaling. The UE may notify the MN of the signaling after SCG failure detection. The signaling may include information indicating that connection between the UE and the MCG is maintained.

The MN may re-establish only connection between the UE and the SCG by using information related to the SCG failure in the signaling. The MN may maintain connection between the UE and the MCG by using the information. In this manner, for example, recovery of connection between the UE and the SCG can be promptly performed while connection between the UE and the MCG is maintained.

Other solutions are disclosed. The UE may transmit, to the MN, information indicating SCG failure by using the RACH, or by using MAC signaling. The UE may transmit information indicating SCG failure by using L1/L2 signaling. In the above-mentioned transmission, the DRB may be used, or the SRB may be used. The MN may change the transmission destination of the UL split bearer, for example, by using the information. In this manner, for example, the UE can promptly notify of the information indicating SCG failure.

Other solutions are disclosed. A PDCP status PDU including information indicating SCG failure may be provided. The UE may transmit the PDCP status PDU to the MCG. The UE may transmit the PDCP status PDU by using the SRB or by using the DRB. The above-mentioned SRB and/or DRB may be a bearer for MCG transmission. In this manner, for example, the UE can promptly notify the MN of the SCG failure.

Other solutions are disclosed. The size of the SCG failure information signaling is set to be equal to or greater than a predetermined threshold. The above-mentioned predetermined threshold may be a threshold related to a buffer storage amount of the PDCP and RLC layers of the UE described in Non-Patent Document 16 (3GPP TS 38.323 V1.0.1). In this manner, for example, the UE can promptly notify the MN of the signaling.

For example, the UE may add padding to the SCG failure information signaling. As another example, the UE may include information related to the SCG configuration disclosed in the first embodiment in the SCG failure information signaling. In this manner, waste in the communication can be reduced, and the UE can promptly notify the MN of the signaling.

As another example, a plurality of the above-mentioned predetermined thresholds may be provided. The plurality of thresholds may be, for example, a threshold used by the UE in a normal case and a threshold used by the UE in SCG failure detection. For example, when the UE detects SCG failure, as the threshold, the UE may use a value different from the threshold in a normal case, for example, a value smaller than the threshold in a normal case. The threshold when the SCG failure is detected may or may not be 0, for example.

For example, in the SCG failure detection, the UE may be able to transmit uplink data using the split bearer to either the MCG or the SCG, by using a condition that a buffer storage amount of the L2 buffer, for example, a buffer of the PDCP layer and the RLC layer is equal to or greater than the threshold used in the SCG failure detection. In the above description, the UE may transmit the uplink data to the MCG. In this manner, for example, the UE can promptly notify the MCG of the SCG failure information.

The above-mentioned plurality of thresholds may be defined in a standard in advance, or the MN may determine the above-mentioned plurality of thresholds and broadcast to the UEs or individually notify the UEs in advance. For example, RRC connection reconfiguration signaling may be used, or RRC connection setup (RRCConnectionSetup) signaling may be used. Both of the above may be used. For example, the threshold used by the UE in the SCG failure detection may be determined as 0 in a standard, and the threshold used in a normal case may be determined by the MN and notified to the UE in advance.

In the recovery from the SCG failure, the UE may restore the transmission destination of split SRB1 back to an original configuration. In the recovery from the SCG failure, the UE may use a newly configured transmission destination as the transmission destination of split SRB1. Operation of using the newly configured transmission destination may be, for example, applied when a transmission destination of split SRB1 is newly configured in a process of recovery from the SCG failure. In this manner, for example, efficient operation of the communication system is enabled. The same may hold true for split SRB2 and/or split DRB.

Other solutions are disclosed. The UE may preferentially transmit the SCG failure information notification over other signaling. For example, the UE may clear a layer 2 buffer provided concerning UL split SRB1. The UE may perform the above-mentioned buffer clearing in SCG failure detection. The SCG failure information notification in the UE may be performed after the above-mentioned buffer clearing. The buffer may be a buffer for PDCP layer initial transmission. The buffer may include a buffer for PDCP layer retransmission, may include a buffer for RLC layer initial transmission and/or retransmission, or may include a buffer for MAC layer initial transmission and/or retransmission.

As another example, in SCG failure detection, the UE may transmit transmission standby data stored in a buffer of the PDCP layer for uplink split SRB1 to the RLC layer for the SCG. The UE may perform the transmission of the SCG failure information from the RRC layer to the PDCP layer after transmission of the above-mentioned stored transmission standby data to the RLC layer for the SCG. In this manner, for example, the UE can promptly notify the MN of the SCG failure information.

As another example, in the MAC layer for the MCG, the UE may preferentially transmit the SCG failure information notification over other signaling and/or other user data. For example, in the MAC layer, the degree of priority of a logical channel for transmitting the SCG failure information may be set higher than other logical channels. The above-mentioned operation of setting a higher degree of priority may be, for example, performed in SCG failure detection. In this manner, for example, the UE can promptly notify the MN of the SCG failure information.

The above-mentioned buffer clearing may be combined with the method disclosed in the second embodiment. For example, the above-mentioned buffer clearing may be combined with the method in which the UE autonomously changes the transmission path of uplink split SRB1 from the SCG to the MCG. As another example, the above-mentioned buffer clearing may be combined with the transmission destination base station change in the SCG failure information signaling, may be combined with the packet duplication in the SCG failure information signaling, or may be combined with the SCG failure information signaling using another SRB.

When the above-mentioned buffer clearing is combined with the SCG failure information signaling using another SRB, the SRB for clearing the buffer may be SRB0 or SRB2. As another example, the above-mentioned buffer clearing may be combined with the method in which the size of the SCG failure information signaling is set to be equal to or greater than a predetermined threshold. In this manner, for example, the SCG failure information signaling can be promptly notified from the UE to the MN

In a similar manner, transmission of the transmission standby data stored in the buffer of the PDCP layer for uplink split SRB1 to the RLC layer for the SCG and/or operation of setting a higher degree of priority for a logical channel for SCG failure information notification in the MAC layer for the MCG may be, for example, combined with the method disclosed in the second embodiment.

As the uplink packet duplication operation in SCG failure detection, the UE may continue uplink data transmission to the MN. The UE may stop uplink data transmission to the SN. The uplink data may be uplink data using the DRB, or may be uplink data using the SRB. In the above description, the SRB may be SRB0, SRB1, SRB2, or SRB3. The uplink data transmission stop to the SN in the UE may be, for example, a transmission stop from the PDCP layer to the RLC layer, a transmission stop from the RLC layer to the MAC layer, a transmission stop from the MAC layer to the PHY layer, or a radio transmission stop in the PHY layer. In each of the above-mentioned layers, retransmission of the data whose transmission is stopped may or may not be performed. The above-mentioned retransmission may be, for example, performed after recovery from the SCG failure. In this manner, for example, complexity in design in the communication system can be avoided.

The second embodiment may be combined with the first embodiment. For example, the SCG failure information notification from the UE disclosed in the second embodiment may include information related to the SCG configuration disclosed in the first embodiment. As another example, based on reception of the SCG failure information disclosed in the second embodiment, the MN may perform the SCG configuration enquiry to the SN disclosed in the first embodiment. I
n the above description, the SN may notify the MN of the SCG configuration. In this manner, for example, inconsistency concerning the SCG configuration between the MN and the UE after the MN receives the SCG failure information can be prevented. As a result, malfunction in the communication system can be prevented.

According to the second embodiment, signaling from the UE to the MN in SCG failure detection can be promptly performed. As a result, the MN can promptly perform an SCG recovery process.

### Third Embodiment

In a beam failure recovery request (Beam Failure Recovery Request; hereinafter also referred to as a BFRQ in some cases) using the PUCCH, transmission may be performed using an SR PUCCH. As another example, a beam measurement result report PUCCH may be used. The base station may perform configuration of a BFRQ PUCCH to the UE. For the configuration, for example, RRC signaling may be used.

However, in the BFRQ using the PUCCH, details of RRC signaling used for configuration of the PUCCH are not disclosed, and a PUCCH format for transmitting the BFRQ is not disclosed. As a result, the UE cannot notify the base station of the BFRQ by using the PUCCH. Further, in the BFRQ PUCCH, how to secure reliability is not disclosed. As a result, reliability in the BFRQ notification from the UE to the base station cannot be secured.

Solutions to the above problems are disclosed below.

The UE transmits the BFRQ PUCCH by using a predetermined sequence. Application of the predetermined sequence may be, for example, performed when only information related to presence/absence of beam failure occurrence is included as BFRQ information, for example. The predetermined sequence may be, for example, a ZC sequence. In this manner, for example, the base station can promptly detect the PUCCH. In the BFRQ PUCCH, a parameter related to a sequence, for example, a root index and/or a cyclic shift amount, may be different from that of an SR PUCCH and/or ACK/NACK PUCCH sequence.

Alternatively, in the BFRQ PUCCH, the parameter may be the same as that of the SR PUCCH and/or ACK/NACK PUCCH. When the parameter is the same as that of the SR PUCCH and/or ACK/NACK PUCCH, BFRQ PUCCH frequency and/or time resources may be different from those of the ACK/NACK PUCCH. In the base station, the BFRQ PUCCH and the SR PUCCH and/or ACK/NACK PUCCH can be distinguished.

As another example, the UE may perform transmission by using PSK and/or QAM modulation (hereinafter also referred to as PSK/QAM modulation in some cases) for the BFRQ PUCCH. PSK may be BPSK, QPSK, or another PSK scheme. QAM may be 16 QAM, 64 QAM, 256 QAM, or another QAM scheme. The same may hereinafter hold true regarding PSK and QAM. Application of PSK/QAM modulation may be, for example, performed when the BFRQ includes a plurality of bits, for example, when the BFRQ includes information related to a beam to be described later.

The UE may transmit the BFRQ PUCCH subjected to PSK/QAM modulation together with the DMRS. The UE may subject the BFRQ PUCCH and the DMRS to frequency multiplexing or time multiplexing.

The UE may transmit the BFRQ PUCCH as a short PUCCH. For example, an effect of frequency diversity can be achieved. Transmission as a long PUCCH is also possible. For example, an effect of time diversity can be achieved.

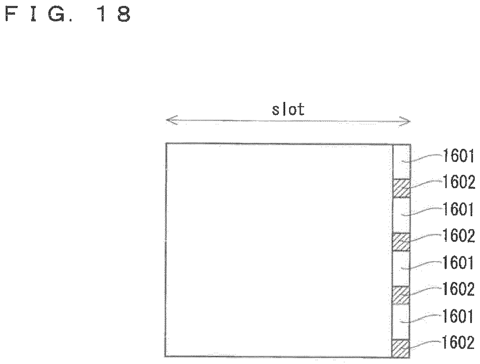

FIG. 18 is a diagram illustrating a BFRQ PUCCH format. FIG. 18 illustrates an example of using PSK/QAM modulation as a BFRQ PUCCH modulation scheme. Further, FIG. 18 illustrates an example of using a short PUCCH of one symbol as the PUCCH.

In FIG. 18, BFRQ information is subjected to PSK/QAM modulation and is mapped to a PUCCH 1601. For demodulation of the PUCCH 1601, a DMRS 1602 is subjected to frequency multiplexing with the same symbol as the PUCCH 1601 and is mapped.

FIG. 18 illustrates an example of using a short PUCCH of one symbol. However, a short PUCCH of two or more symbols or a long PUCCH may be used. Further, an example in which the DMRS 1602 and the PUCCH 1601 are subjected to FDM is illustrated. However, TDM may be used.

The BFRQ PUCCH may include information related to presence/absence of the BFRQ. For example, the UE may use the BFRQ by transmitting the PUCCH, or the UE may not use the BFRQ by not transmitting the PUCCH. As another example, the UE may use different sequences used for the BFRQ PUCCH, depending on presence/absence of the BFRQ. As another example, an identifier indicating presence/absence of the BFRQ may be included in the PUCCH. As another example, the PUCCH modulation scheme may be different depending on presence/absence of the BFRQ. For example, when the BFRQ is used, the PUCCH may use PSK and/or QAM modulation, whereas when the BFRQ is not used, the PUCCH may include a predetermined sequence (for example, a ZC sequence).

The BFRQ PUCCH may include information related to a beam of beam failure. For example, a downlink beam identifier may be included, or information related to a measurement result of the downlink beam by the UE may be included. The base station may, for example, increase transmit power of the downlink beam by using the information related to the measurement result. In this manner, for example, prompt recovery of the beam in the UE is enabled.

The BFRQ PUCCH may include information related to a beam measured by the UE. For example, a downlink beam identifier may be included, or information related to a measurement result of the downlink beam by the UE may be included. Beam information included in the information may be, for example, beam information whose measurement result of the UE is equal to or greater than a predetermined threshold.

The threshold may be defined in a standard in advance, or may be broadcast or individually notified to the UEs from the base station in advance. Beam information included in the information may be information related to a plurality of beams. The base station may use the information for downlink beam recovery. In this manner, for example, prompt recovery from beam failure in the UE is enabled.

Configuration necessary for BFRQ PUCCH transmission from the UE may be defined in a standard. In this manner, for example, the signaling amount required for configuration can be reduced. As another example, the information may be broadcast or individually notified to the UEs from the base station in advance. For the individual notification, for example, RRC signaling may be used. The RRC signaling may be, for example, RRC connection reconfiguration (RRCConnectionReconfiguration). In this manner, for example, flexible control using a use state in the UE, another UE, and another base station in the communication system is enabled.

As another example, the information may be notified from the base station to the UE by using MAC signaling, or may be notified from the base station to the UE by using L1/L2 signaling. In this manner, for example, the information can be promptly notified to the UE. For the configuration, the above-mentioned combination may be used. For example, the use of sequence modulation for the PUCCH may be defined in a standard, and information related to the sequence may be individually notified from the base station to the UE.

As configuration necessary for BFRQ PUCCH transmission from the UE, the following items (1) to (4) are disclosed.
(1) Information related to PUCCH transmission resources
(2) Information related to a modulation scheme
(3) Information related to a notification from the UE
(4) Combination of the above-mentioned items (1) to (3)

The above-mentioned item (1) may, for example, include information related to BFRQ PUCCH transmission timing. The information may include information related to a BFRQ PUCCH transmission cycle and offset, or may include information related to the number of transmission symbols. The above-mentioned item (1) may include information related to PUCCH frequency resources, or may include information indicating whether the PUCCH is a long PUCCH or a short PUCCH.

The above-mentioned item (2) may be, for example, modulation using PSK and/or QAM, or may be modulation using a sequence (for example, a ZC sequence).

In the above-mentioned item (2), regarding modulation using PSK and/or QAM, information related to the DMRS may be included. The information related to the DMRS may, for example, include information related to a root index of the DMRS, or may include information related to a cyclic shift amount of the DMRS. Information related to a multiplexing scheme for the DMRS and the PUCCH may be included. The multiplexing scheme may be, for example, FDM or TDM.

In the above-mentioned item (2), regarding modulation using a sequence, the information related to a root index of a sequence, or the information related to a cyclic shift amount of a sequence may be included.

The above-mentioned item (3) may, for example, include information related to presence/absence of a notification of information related to a beam. The beam may be a beam of beam failure, may be a beam measured by the UE, or may be both of the above.

The above-mentioned item (3) may include information related to a signal used by the UE in beam measurement. Possible examples include a CSI-RS, a synchronization signal (SS), and both of the above.

The above-mentioned item (3) may include information related to presence/absence of a measurement result notification.

A part or all of the information related to the above-mentioned items (1) to (4) may be defined in a standard in advance. In this manner, for example, the signaling amount in the notification from the base station to the UE can be reduced.

The UE may notify of the BFRQ at the first BFRQ PUCCH transmission timing after beam failure detection. In this manner, for example, the UE can promptly notify the base station of the BFRQ. As another example, the UE may notify of the BFRQ at the first BFRQ PUCCH transmission timing after new beam detection. In this manner, for example, prompt recovery from the beam failure is enabled.

Other solutions are disclosed. The UE may transmit the BFRQ by using an SR PUCCH. Information of the SR and the BFRQ may be multiplexed on the same PUCCH. In multiplexing of the SR and the BFRQ, the BFRQ may not include information of a beam. For example, as the information of the BFRQ, only an identifier indicating that beam failure has occurred may be used.

A predetermined sequence may be used in the PUCCH to be multiplexed. Application of the predetermined sequence may be, for example, performed when only information related to presence/absence of beam failure occurrence is included as BFRQ information, for example. Regarding the predetermined sequence, different sequences may be used in each of the cases where only the SR is present, only the BFRQ is present, and both of the SR and the BFRQ are present. When neither the SR nor the BFRQ is present, the PUCCH may not be transmitted.

As the above-mentioned different sequences, for example, a root index of the sequence may be different, a cyclic shift amount (Cyclic shift) may be different, a sequence itself may be different, for example, an m sequence may be used when the BFRQ is present. A plurality of the above may be used in combination. In this manner, for example, the base station can easily acquire the information related to the SR and/or the BFRQ. The base station may acquire the information related to the SR and the information related to the BFRQ, by using a PUCCH sequence.

As another example, PSK/QAM modulation may be used in the PUCCH to be multiplexed. Application of PSK/QAM modulation may be, for example, performed when the BFRQ includes a plurality of bits, for example, when the BFRQ includes information related to a beam. The PUCCH may, for example, include information related to presence/absence of the SR, or may include information related to the BFRQ (for example, presence/absence of the BFRQ, or information related to a beam).

In application of PSK/QAM modulation to the PUCCH to be multiplexed, the UE may multiplex the PUCCH subjected to PSK/QAM modulation and the DMRS and may transmit the multiplexed resultant. The multiplexing may be, for example, FDM or TDM. The base station may determine presence/absence of the BFRQ by using a signal received from the UE. For example, the base station may determine presence/absence of the BFRQ, based on a condition that a QPSK signal and a DMRS signal are subjected to FDM. In this manner, for example, the base station can easily determine presence/absence of the BFRQ.

In application of PSK/QAM modulation to the PUCCH to be multiplexed, the DMRS may include information related to presence/absence of the SR. For example, according to presence/absence of the SR, different DMRS sequences (for example, a root index and cyclic shift) may be used. In this manner, for example, the information amount that can be included in the PUCCH can be increased.

In application of PSK/QAM modulation to the PUCCH to be multiplexed, a PUCCH of another UE may not be transmitted in time/frequency resources in which the PUCCH is transmitted. In this manner, interference with the PUCCH from another UE can be prevented.

As another example, in application of PSK/QAM modulation to the PUCCH to be multiplexed, a PUCCH of another UE may be transmitted in time/frequency resources in which the PUCCH is transmitted. The UE may transmit the PUCCH in a contention-based manner. The UE may retransmit the PUCCH to the base station, based on a condition that beam recovery is not performed within a predetermined time period and/or that an uplink grant is not received from the base station. The above-mentioned predetermined time period may be defined in a standard, or may be broadcast or notified to the UE from the base station in advance. In this manner, multiplexing with a PUCCH of another UE is enabled. As a result, the capacity of the communication system can be increased.

Whether a PUCCH of another UE can be transmitted in the time/frequency resources in which the PUCCH is transmitted described above may be applied to another UCI PUCCH.

In the PUCCH to be multiplexed, both of a predetermined sequence and PSK/QAM modulation may be used. For example, regarding the PUCCH without the BFRQ, i.e., the PUCCH with only the SR, a predetermined sequence may be used, whereas regarding the PUCCH with the BFRQ, PSK/QAM modulation may be used. In a case where neither the SR nor the BFRQ is present, the PUCCH may not be transmitted. In this manner, for example, a conventional SR PUCCH can be continuously used in the communication system, and thus complexity in design in the communication system can be avoided.

As another example of a BFRQ transmission method using the SR PUCCH, a plurality of mapping of the PUCCH may be used. For example, according to presence/absence of the SR, different mapping may be used as mapping of the PUCCH. The PUCCH mapping different according to the SR may be, for example, performed when the BFRQ includes a plurality of bits, for example, when the BFRQ includes information related to a beam. As another example, according to presence/absence of the BFRQ, different mapping may be used as mapping of the PUCCH. The PUCCH mapping different according to presence/absence of the BFRQ may be, for example, performed when the information related to the BFRQ includes only information related to presence/absence of beam failure occurrence.

The different mapping may be, for example, mapping that a signal is replaced between symbols or between sub-carriers, or may be a combination of the both. The above-mentioned replacement between symbols may be a replacement between units, with each of the units including a plurality of symbols. The above-mentioned replacement between sub-carriers may be a replacement between units, with each of the units including a plurality of sub-carriers. In this manner, for example, the BFRQ information can be multiplexed without changing a sequence or changing a modulation scheme, and thus complexity in design in the communication system can be avoided.

Information related to the above-mentioned plurality of mapping may be defined in a standard, or may be broadcast or individually notified to the UEs from the base station in advance.

Information included in the PUCCH on which the SR and the BFRQ are multiplexed may include a part or all of the above-mentioned BFRQ information included in the BFRQ PUCCH. The information related to the SR, for example, information related to presence/absence of the SR may be included. For example, when a sequence is used in the PUCCH on which the SR and the BFRQ are multiplexed, the PUCCH may include only information related to presence/absence of the SR and information related to presence/absence of the BFRQ.

In BFRQ transmission using the SR PUCCH, only one of the SR and the BFRQ may be transmitted on one PUCCH. Specifically, either the SR or the BFRQ may be prioritized. In the above description, the PUCCH format may be a conventional SR PUCCH format, or may be the same as the above-mentioned BFRQ PUCCH format. In this manner, for example, complexity in design in the communication system can be avoided.

Regarding assignment of priority between the SR and the BFRQ, for example, UCI to be prioritized may be statically determined in a standard, or may be broadcast or semi-statically notified from the base station to the UE. The semi-static notification may be, for example, RRC dedicated signaling. Alternatively, the notification may be dynamical notification from the base station to the UE by using MAC signaling or L1/L2 signaling.

As another example of the assignment of priority, UCI that is generated first in the UE may be prioritized, or as another example, UCI that is not transmitted on the PUCCH in the immediately preceding transmission may be prioritized.

Configuration necessary for BFRQ transmission using the SR PUCCH may be defined in a standard, or may be broadcast or individually notified to the UEs from the base station in advance, in a similar manner to the configuration necessary for BFRQ PUCCH transmission.

In notification of the configuration from the base station to the UE using RRC dedicated signaling, the configuration details may be, for example, included in configuration details of the SR. In this manner, for example, the base station can notify the UE of SR configuration and BFRQ configuration at the same time, and thus configuration processing in the UE can be promptly performed.

As the configuration necessary for BFRQ transmission using the SR PUCCH, the following items (1) to (6) are disclosed.
(1) Information related to PUCCH transmission resources
(2) Information related to a modulation scheme
(3) Information related to a notification from the UE
(4) Information related to multiplexing of the SR and the BFRQ
(5) Information related to PUCCH mapping
(6) Combination of the above-mentioned items (1) to (5)

The above-mentioned item (1) may be similar to the item (1) of the configuration necessary for BFRQ PUCCH transmission.

In the above-mentioned item (1), information related to the PUCCH transmission timing may be the same as information related to SR transmission timing. PUCCH scheduling in the base station is facilitated.

The above-mentioned item (2) may be similar to the item (2) of the configuration necessary for BFRQ PUCCH transmission.

In the above-mentioned item (2), information related to the DMRS in modulation using PSK and/or QAM may include information of a DMRS sequence in each of a case where the SR is present and a case where the SR is absent. Information related to a difference between DMRS sequences (for example, a root index and a cyclic shift amount) of the case where the SR is present and the case where the SR is absent may be included.

Regarding modulation using a sequence, the above-mentioned item (2) may include information of a sequence in each of the cases where only the SR is present, only the BFRQ is present, and both of the SR and the BFRQ are present. Information related to a difference of sequences among the above-mentioned three items may be included.

The above-mentioned item (3) may include information similar to the item (3) of the configuration necessary for BFRQ PUCCH transmission, or may include information related to SR notification.

The above-mentioned item (4) may, for example, include information related to whether the SR and the BFRQ can be multiplexed on one PUCCH. If the multiplexing is not possible, the information may be information indicating which of the PUCCH and the SR is prioritized.

The above-mentioned item (5) may, for example, include information related to whether the above-mentioned different mapping of the PUCCH can be supported, may include information indicating whether a signal is replaced between symbols or between sub-carriers, or may include information related to the number of symbols and/or sub-carriers to be included as a unit.

The UE may detect a downlink communication beam. The detection may be performed after beam failure detection in the UE. A signal used for beam detection in the UE may be defined in a standard in advance, or may be broadcast or individually notified to the UEs from the base station. The signal may be, for example, a CSI-RS or a synchronization signal (SS). As another example, the UE may not perform the downlink communication beam detection operation.

The transmission timing of the PUCCH to be transmitted from the UE to the base station, for example, the cycle and the offset, may be the same regardless of the presence/absence of the BFRQ. In this manner, the base station can detect the BFRQ, based on reception of the PUCCH.

The UE may notify of the BFRQ at the first SR PUCCH transmission timing after beam failure detection. In this manner, for example, the UE can promptly notify the base station of the BFRQ. As another example, the UE may notify of the BFRQ at the first SR PUCCH transmission timing after new beam detection. In this manner, for example, prompt recovery from the beam failure is enabled.

The base station may change a downlink beam for the UE by using the BFRQ. The base station may also transmit the CSI-RS to another beam by using the BFRQ. The mapping of the CSI-RS in another beam may be the same as that of the original beam. In this manner, for example, the UE can detect another beam with the same mapping as the original beam. As a result, the UE can promptly perform beam detection for recovery from the beam failure.

Other solutions are disclosed. The UE may transmit the BFRQ by using a beam measurement result report PUCCH. Specifically, the UE may include BFRQ information in a beam measurement result report. The PUCCH may be a PUCCH used to report a synchronization signal (SS) measurement result to the base station. The PUCCH may be newly provided.

The BFRQ information to be included in the beam measurement result report may include information related to presence/absence of the BFRQ (for example, a flag indicating presence/absence of the BFRQ), may include information using a beam identifier, or may include information related to the beam measurement result. As the information using a beam identifier, for example, the BFRQ may be associated with a state that the beam identifier is a predetermined special value (for example, all the bits are '0' or all the bits are '1').

As the information related to the beam measurement result, for example, the BFRQ may be associated with a state that the measurement result is equal to or less than a predetermined threshold. As another example, the BFRQ may be associated with a state that the measurement result is a predetermined special value (for example, all the bits are '0' or all the bits are '1'). In this manner, for example, the information of presence/absence of the BFRQ and the information of the beam measurement result report can be used in common. As a result, complexity in design of the UE and the base station concerning the BFRQ can be avoided.

The beam identifier and/or beam measurement result included in the BFRQ information to be included in the beam measurement result report PUCCH may be a CSI-RS beam identifier and/or beam measurement result. In this manner, for example, the base station can promptly perform recovery from the beam failure by using the information related to the CSI-RS beam.

Alternatively, the BFRQ information to be included in the beam measurement result report PUCCH may be only the information related to presence/absence of the BFRQ. The base station may perform recovery operation from the beam failure by using the information related to the beam included in the beam measurement result report. In this manner, for example, the signaling amount of the beam measurement result report PUCCH included in the BFRQ can be prevented from increasing.

As another example, the DMRS in the beam measurement result report PUCCH may be changed by using the BFRQ information. The change may be, for example, a change of the DMRS sequence. The sequence change may be, for example, a root index change, a cyclic shift amount change, or a combination of the both. In this manner, for example, the UE can promptly notify the base station of the PUCCH including the BFRQ.

As another example, the beam measurement result information may not be included in the beam measurement result report PUCCH. The PUCCH may include only information related to the BFRQ. The information related to the BFRQ may be similar to that of the above-mentioned case where the BFRQ information is multiplexed on the beam measurement result report PUCCH.

When the PUCCH includes only information related to the BFRQ, modulation using a sequence may be performed. The modulation using a sequence may be, for example, performed in a similar manner to that of the SR PUCCH. In this manner, for example, the base station can promptly detect the BFRQ.

As another example of a BFRQ transmission method using the SR PUCCH, a plurality of mapping of the PUCCH may be used. The above-mentioned plurality of mapping may be similar to that in the BFRQ transmission method using the SR PUCCH. For example, according to presence/absence of the BFRQ, different mapping may be used as PUCCH mapping. The PUCCH mapping different according to presence/absence of the BFRQ may be, for example, performed when the information related to the BFRQ includes only information related to presence/absence of beam failure occurrence.

Configuration necessary for BFRQ transmission using the beam measurement result report PUCCH may be defined in a standard in advance, or may be broadcast or individually notified from the base station to the UEs, in a similar manner to the above-mentioned configuration necessary for BFRQ transmission using the SR PUCCH. For the individual notification, for example, RRC signaling may be used, MAC signaling may be used, or L1/L2 signaling may be used. In this manner, for example, an effect similar to that of multiplexing of the SR and the BFRQ can be achieved.

As the above-mentioned configuration necessary for BFRQ transmission using the beam measurement result report PUCCH, the following items (1) to (6) are disclosed.
(1) Information related to PUCCH transmission resources
(2) Information related to a modulation scheme
(3) Information related to a notification from the UE
(4) Information related to multiplexing of the beam measurement result and the BFRQ
(5) Information related to PUCCH mapping
(6) Combination of the above-mentioned items (1) to (5)

The above-mentioned item (1) may be similar to the item (1) of the configuration necessary for BFRQ transmission using the SR PUCCH. Information related to the beam measurement result report PUCCH transmission timing including the BFRQ may be the same as information related to beam measurement result report transmission timing. PUCCH scheduling in the base station is facilitated.

The above-mentioned item (2) may be similar to the item (2) of the configuration necessary for BFRQ transmission using the SR PUCCH.

In the above-mentioned item (2), information related to the DMRS in modulation using PSK and/or QAM may include information of a DMRS sequence in each of a case where the BFRQ is present and a case where the BFRQ is absent. Information related to a difference between DMRS sequences (for example, a root index and a cyclic shift amount) of the case where the BFRQ is present and the case where the BFRQ is absent may be included.

Regarding modulation using a sequence, the above-mentioned item (2) may include information of a sequence of a case where only the BFRQ is present.

The above-mentioned item (3) may be similar to the item (3) of the configuration necessary for BFRQ transmission using the SR PUCCH. Information related to the beam measurement result report may be included.

The above-mentioned item (4) may be similar to the item (4) of the configuration necessary for BFRQ transmission using the SR PUCCH.

The above-mentioned item (5) may be similar to the item (5) of the configuration necessary for BFRQ transmission using the SR PUCCH.

Operation of the UE in BFRQ transmission using the beam measurement result report PUCCH may be similar to the operation of the UE in BFRQ transmission using the SR PUCCH. The same may hold true for the operation of the base station.

The beam measurement result report PUCCH according to the third embodiment may be periodic, semi-persistent, or aperiodic. For example, the UE may notify of the BFRQ at the first beam measurement result report PUCCH transmission timing after beam failure detection. In this manner, for example, the UE can promptly notify the base station of the BFRQ. As another example, the UE may notify of the BFRQ at the first beam measurement result report PUCCH transmission timing after new beam detection. In this manner, for example, prompt recovery from the beam failure is enabled.

The beam measurement result report PUCCH according to the third embodiment may be a CSI PUCCH. The UE may transmit the BFRQ by using the CSI PUCCH. In BFRQ transmission using the CSI PUCCH, a method similar to the BFRQ transmission method using the beam measurement result report PUCCH may be used. In this manner, an effect similar to that of multiplexing of the beam measurement result and the BFRQ can be achieved.

In the third embodiment, another piece of UCI and the BFRQ may be multiplexed. Another piece of UCI may be, for example, an Ack/Nack. For BFRQ transmission using an Ack/Nack PUCCH, a method similar to that for the BFRQ using the SR PUCCH may be used, or a method similar to that of BFRQ transmission using the beam measurement result report PUCCH may be used. In this manner, for example, flexible configuration concerning the PUCCH is enabled.

The BFRQ transmission using respective UCI PUCCHs disclosed in the third embodiment may be combined. The above-mentioned PUCCH may be periodic, semi-persistent, or aperiodic. A plurality of PUCCHs among the periodic PUCCH, the semi-persistent PUCCH, and the aperiodic PUCCH may be combined together. For example, the UE may notify of the BFRQ at the first PUCCH transmission timing regardless of UCI. In this manner, for example, prompt notification from the UE to the base station is enabled.

In beam failure determination in the base station, the PUCCH including the BFRQ disclosed in the third embodiment may not be used. The base station may determine beam failure in the UE by using a reception condition depending on a type of PUCCH transmission timing from the UE. The type of PUCCH transmission timing may be a periodic PUCCH, a semi-persistent PUCCH, or an aperiodic PUCCH. For example, the base station may determine beam failure in the UE when the base station cannot receive the aperiodic PUCCH from the UE while receiving the periodic PUCCH from the UE. As another example, the base station may determine beam failure in the UE when the base station cannot receive the aperiodic PUCCH from the UE.

In the above description, information related to presence/absence of reception of a plurality of PUCCHs may be used. For example, the base station may determine beam failure in the UE when the base station cannot receive the aperiodic PUCCH a predetermined number of times or more consecutively. In the above description, the base station may determine that the base station cannot receive the PUCCH, based on a fact that received quality of the PUCCH in the base station falls below predetermined quality. In this manner, for example, the signaling amount in the radio interface can be reduced.

The base station may transmit the PDCCH to the UE by using information related to a beam included in the BFRQ. In the PDCCH transmission, the base station may use a beam acquired from the information. After BFRQ transmission, the UE may detect the PDCCH within a range of a predetermined time window. In this manner, for example, recovery from the beam failure can be promptly performed.

The UE may transmit the PUCCH including the BFRQ by using a plurality of beams. The PUCCH may be a BFRQ PUCCH, an SR PUCCH, a beam measurement result report PUCCH, or another UCI PUCCH. In this manner, for example, reliability of BFRQ notification from the UE can be secured. As another example, the UE may transmit the PUCCH including the BFRQ a plurality of times. The plurality of times of transmission may be, for example, transmission of the same PUCCH by using different symbols, transmission of the same PUCCH by using different slots, or may be transmission of the same PUCCH in PUCCH transmission cycle of respective pieces of UCI. In this manner, for example, reliability of BFRQ notification from the UE can be enhanced.

As another example, the UE may transmit the PUCCH including the BFRQ as a long PUCCH. The PUCCH may be a BFRQ PUCCH, an SR PUCCH, a beam measurement result report PUCCH, or another UCI PUCCH. In this manner, for example, time diversity can be secured. As another example, the UE may transmit the PUCCH as a short PUCCH. Frequency diversity can be secured. As another example, the UE may use the PUCCH by combining a short PUCCH and a long PUCCH. Time and frequency diversity can be secured. The combination of a short PUCCH and a long PUCCH may be, for example, equivalent to a state that the UE uses both a short PUCCH and a long PUCCH in the same slot.

The base station may give an instruction to the UE beforehand as to in which method the PUCCH is to be transmitted, among a short PUCCH, a long PUCCH, and both of a short PUCCH and a long PUCCH. For the instruction, for example, RRC dedicated signaling may be used, MAC signaling may be used, or L1/L2 signaling may be used.

According to the third embodiment, the UE can transmit the BFRQ by using the PUCCH. Further, the UE can promptly recover from the beam failure.

The embodiments and the modifications are merely illustrations of the present invention, and can be freely combined within the scope of the present invention. Any constituent elements of the embodiments and the modifications can be appropriately modified or omitted.

For example, the subframe in the embodiments and the modifications is an example time unit of communication in the fifth generation base station communication system. The subframe may be set per scheduling. The processes described in the embodiments and the modifications as being performed per subframe may be performed per TTI, per slot, per sub-slot, or per mini-slot.

While the invention is described in detail, the foregoing description is in all aspects illustrative and does not restrict the present invention. Therefore, numerous modifications and variations that have not yet been exemplified are devised without departing from the scope of the present invention.

### Explanation of Reference Signs

- 200: Communication system,
- 202: Communication terminal device,
- 203: Base station device

## Claims

1. A communication system comprising:
- a communication terminal device; and
- a plurality of base stations configured to perform radio communication with the communication terminal device,
wherein the plurality of base stations include a master base station and a secondary base station configuring dual connectivity with respect to the communication terminal device, and
when failure occurs in a secondary cell group (SCG) used for communication between the communication terminal device and the secondary base station, the master base station is configured to acquire latest SCG configuration.

2. The communication system according to claim 1,
wherein when failure occurs in the SCG, the communication terminal device is configured to notify the master base station of the latest SCG configuration.

3. The communication system according to claim 1,
wherein when failure occurs in the SCG, the master base station is configured to enquire of the secondary base station about the latest SCG configuration, and the secondary base station is configured to notify the master base station of the latest SCG configuration in response to an enquiry from the master base station.

4. A base station configured to perform radio communication with a communication terminal device,
wherein the base station is configured to operate as a master base station of dual connectivity with respect to the communication terminal device, and
when failure occurs in a secondary cell group (SCG) used for communication between the communication terminal device and a secondary base station of the dual connectivity, the base station is configured to acquire latest SCG configuration.
